# EUROPÄISCHE PATENTANMELDUNG

(11) **EP 3 573 043 A2**
(43) Veröffentlichungstag der Anmeldung: **27.11.2019**
(21) Anmeldenummer: 19187232.4
(22) Anmeldetag: 19.07.2019
(51) Int. Cl.: G09F 13/00, B60R 13/02, B60Q 3/14

(54) **BAUTEIL MIT BASISTEIL, ZUSATZTEIL UND DECKSCHICHT AUS LACK SOWIE VERFAHREN ZUR HERSTELLUNG EINES SOLCHEN BAUTEILS**

(71) Anmelder: WEIDPLAS GmbH, 8700 Küsnacht (CH)
(72) Erfinder: RUDOLF, René, 08412 Werdau (DE); BEFELEIN, Carsten, 85540 Haar (DE); LAMBERT, Sven, 8630 Rüti (CH); KINDL, Christoph, 66386 St. Ingbert (DE); QUIRING, Johannes, 59505 Bad Sassendorf (DE); FRIJTERS, Jan-Eric, 8843 Oberiberg (CH); MADRID FERNANDEZ, Paula, 8853 Lachen (CH)
(74) Vertreter: Rutz, Andrea

(57) **Zusammenfassung**

Es wird ein Bauteil insbesondere für ein Fahrzeug, sowie ein Verfahren zur Herstellung eines solchen Bauteils angegeben. Das Bauteil weist ein Basisteil (1) mit einer Vorderseite (101) und einer Rückseite (102) auf. Auf der Vorderseite (101) des Basisteils (1) ist eine aus einem Lack hergestellte Deckschicht (2, 17) angebracht ist und bildet zumindest einen Teil einer Sichtseite (201) des Bauteils. Ein mit der Deckschicht (2, 17) in Kontakt stehendes Zusatzteil (3, 4, 25) ist randseitig umlaufend vollständig abgedeckt. Das Basisteil (1) weist einen oder mehrere Durchbrüche (105) auf, welche sich von der Rückseite (102) bis zur Vorderseite (101) des Basisteils (1) erstrecken. Das Zusatzteil (3, 4, 25) bildet ein Abdeckelement zur dichtenden Abdeckung von sämtlichen der einen oder mehreren Durchbrüche (105), die vom Zusatzteil (3, 4, 25) vollständig überspannt werden.

## Beschreibung

### TECHNISCHES GEBIET

Die vorliegende Erfindung betrifft ein Bauteil, insbesondere für ein Fahrzeug, mit einem Basisteil, einer daran angebrachten Deckschicht aus Lack und einem Zusatzteil. Ausserdem betrifft die Erfindung ein Verfahren zur Herstellung eines solchen Bauteils.

### STAND DER TECHNIK

Bauteile mit einem Basisteil und einer an dessen Vorderseite angebrachten Deckschicht aus Lack sind insbesondere im Automobilbau beispielsweise in Form von Zier- oder Einstiegsleisten bekannt. Indem eine Deckschicht an die Vorderseite des Basisteils angebracht wird, können im Hinblick auf das fertige Bauteil vielfältige optische Wirkungen erzielt werden. Lack hat sich als ein besonders geeignetes Material erwiesen, um einerseits eine gegenüber äusseren Einflüssen sehr widerstandsfähige Oberfläche zu bilden, und um andererseits dem Bauteil besondere optische Eigenschaften zu verleihen.

Die DE 10 2009 004 985 A1 offenbart ein Verkleidungsteil für Fahrzeuge, bei dem eine Lackschicht auf die Sichtschicht aufgesprüht ist, um aufgrund der widerstandsfähigen Eigenschaften des Lackes die Lebensdauer des Verkleidungsteils zu erhöhen.

Um den Verbrauch des kostspieligen Lackmaterials bei der Herstellung der Bauteile zu reduzieren, werden vermehrt Herstellverfahren angewandt, bei welchen der Lack nicht auf das Basisteil aufgesprüht, sondern im Spritzgussverfahren an dieses angespritzt wird. Die Herstellung im Spritzgussverfahren bietet den zusätzlichen Vorteil, dass die Form der durch die Lackschicht gebildeten Oberfläche durch das Formteil des Spritzgusswerkzeugs vorgegeben werden kann.

Beispielsweise offenbart die von derselben Anmelderin eingereichte internationale Anmeldung WO 2016/193384 A1 ein Bauteil mit zwei an ein Dekor- bzw. Basisteil angespritzten Deckschichten, welche gemeinsam mit einem Bereich des Dekorelements eine Sichtseite des Bauteils bilden.

Die EP 2 684 744 B1 offenbart ein Zierteil für ein Kraftfahrzeug mit einer im Spritzgussverfahren auf ein Trägerteil aufgebrachten, aus Polyurea oder Polyurethan gebildeten Deckschicht.

Aus verschiedenen Gründen sind bei vielen Ausführungsformen im Basisteil jeweils Durchbrüche bzw. Öffnungen vorhanden, welche sich von der Rückseite des Basisteils bis zur Lackschicht erstrecken. Durchbrüche im Basisteil können beispielsweise, wie zum Beispiel in der DE 10 2010 017 494 A1 offenbart, zum Einsetzen eines Leuchtelements dienen, um die Lackschicht zu hinterleuchten.

Insbesondere wenn es sich bei der Deckschicht um einen Lack handelt, der in der Regel dünnflüssig ist und beispielsweise eine Hochglanzschicht bildet, besteht das Problem, dass am fertigen Bauteil der oder die Anspritzpunkte bzw. Angussstellen sichtbar bleiben. Um dies zu verhindern, wird in der WO 2018/104045 A1 vorgeschlagen, das Beschichtungsmaterial von hinten durch einen im Basisteil vorgesehenen Durchbruch hindurch zu spritzen.

In der noch unveröffentlichten europäischen Anmeldung EP 19 177 379.5 derselben Anmelderin findet sich eine Offenbarung, eine aus einem transparenten Lack hergestellte Deckschicht nicht nur durch einen in einem Basisteil ausgebildeten Durchbruch hindurch anzuspritzen, sondern auf demselben Weg auch zu hinterleuchten.

Das Vorhandensein eines Durchbruchs im Basisteil führt zum Problem, dass Schmutzpartikel und/oder Feuchtigkeit zur Lackschicht gelangen können. Im Falle einer transparent oder transluzent ausgebildeten Lackschicht, kann dies das optische Erscheinungsbild des Bauteils beeinträchtigen. Wenn die Schmutzpartikel bzw. Feuchtigkeit bereits während der Herstellung durch den Durchbruch gelangen, besteht die Gefahr von Einlagerungen in der Lackschicht oder sogar einer unerwünschten chemischen Reaktion mit dem Lackmaterial während des Einspritzvorgangs. In Fällen, bei denen der Durchbruch mit einem anderen Material gefüllt wird, ist die Auswahl auf Materialien beschränkt, welche nicht mit dem Material der angrenzenden Lackschicht reagieren.

### DARSTELLUNG DER ERFINDUNG

Es ist also eine Aufgabe der vorliegenden Erfindung, ein Bauteil mit einem Basisteil und einer daran angebrachten Lackschicht anzugeben, wobei im Basisteil einer oder mehrere Durchbrüche ausgebildet und die eingangs erwähnten Probleme behoben oder zumindest vermindert sind.

Zur Lösung dieser Aufgabe wird ein Bauteil vorgeschlagen, wie es in Anspruch 1 angegeben ist. Ausserdem wird in Anspruch 16 ein Verfahren zur Herstellung eines insbesondere derart ausgebildeten Bauteils angegeben. Bevorzugte Ausführungsformen sind in den abhängigen Ansprüchen angegeben.

Die vorliegende Erfindung stellt also ein Bauteil, insbesondere für ein Fahrzeug, zur Verfügung, aufweisend
ein Basisteil mit einer Vorderseite und einer Rückseite;
eine aus einem Lack hergestellte Deckschicht, welche auf der Vorderseite des Basisteils angebracht ist und zumindest einen Teil einer Sichtseite des Bauteils bildet; sowie
ein mit der Deckschicht in Kontakt stehendes Zusatzteil, welches, bevorzugt von der Deckschicht und/oder vom Basisteil, randseitig umlaufend vollständig abgedeckt ist,
wobei das Basisteil einen oder mehrere Durchbrüche aufweist, welche sich von der Rückseite bis zur Vorderseite des Basisteils erstrecken,
und wobei das Zusatzteil ein Abdeckelement zur dichtenden Abdeckung von sämtlichen der einen oder mehreren Durchbrüche bildet, die vom Zusatzteil vollständig überspannt werden.

Indem das Zusatzteil ein Abdeckelement bildet und sämtliche davon überspannten Durchbrüche dichtend abdeckt, können keine Feuchtigkeit und keine Schmutzpartikel mehr durch den oder die Durchbrüche hindurch zur Deckschicht gelangen. Eine optische Beeinträchtigung der Deckschicht in der Wahrnehmung des Betrachters aufgrund von Schmutzpartikeln und/oder Feuchtigkeit, welche durch den oder die Durchbrüche hindurch zur Rückseite der Deckschicht gelangen, kann dadurch wirksam verhindert werden. Bei der Herstellung des Bauteils kann zudem der Weg von dem bzw. den Durchbrüchen zur Deckschicht mittels des Zusatzteils unterbrochen werden, um eine Interaktion des Lackmaterials mit Substanzen, welche sich innerhalb des bzw. der Durchbrüche befinden, zu verunmöglichen. Das Zusatzteil wird deshalb bei der Herstellung bevorzugt bereits an das Basisteil angebracht, bevor die Deckschicht an das Basisteil angebracht wird. Falls der oder die Durchbrüche zumindest zum Teil mit einem anderen Material als demjenigen des Basisteils gefüllt werden sollen, ist aufgrund des Zusatzteils die Materialwahl erweitert.

Da zudem das Zusatzteil randseitig umlaufend vollständig, bevorzugt von der Deckschicht und/oder vom Basisteil, abgedeckt ist, ist dieses optimal im Bauteil eingebettet. Die Abdichtung zu dem bzw. den Durchbrüchen hin ist dann besonders gut. Das Zusatzteil ist dadurch zudem sehr gut geschützt und bevorzugt nur mittels Zerstörung des Bauteils, noch bevorzugter sogar nur mittels Zerstörung des Zusatzteils selbst, vom Bauteil entfernbar. Des Weiteren macht das Bauteil aus Sicht des Betrachters dann insgesamt einen kompakten, stabilen und qualitativ hochwertigen Eindruck.

Beim Basisteil handelt es sich bevorzugt um ein Trägerteil. Ein Trägerteil weist üblicherweise eine derartige Eigenstabilität auf, dass es bevorzugt für die Deckschicht, noch bevorzugter für das Bauteil insgesamt, formgebend ist.

Die Deckschicht ist bevorzugt direkt auf der Vorderseite des Basisteils angebracht, das heisst kontaktiert diese.

Die randseitig umlaufend vollständige Abdeckung des Zusatzteils bedeutet, dass die periphere äussere Stirnfläche des Zusatzteils umlaufend vollständig vom Material eines anderen Bauteilelements, bevorzugt vom Material der Deckschicht und/oder des Basisteils, kontaktiert wird.

Der eine oder die mehreren im Basisteil ausgebildeten und vom Zusatzteil dichtend abgedeckten Durchbrüche erstrecken sich jeweils durchgehend und bevorzugt geradlinig durch das Basisteil hindurch. Die Begrenzungsflächen der Durchbrüche sind bevorzugt zylinderförmig oder konisch ausgestaltet. Durch die Konizität des Durchbruches können spezielle Lichteffekte erzielt werden. Vorteilhaft ist die den Durchbruch begrenzende Oberfläche oder das den Durchbruch bildende Material lichtreflektierend ausgebildet. Hierdurch ist eine effiziente Hindurchleitung von Licht durch den Durchbruch möglich. Zudem können ebenfalls spezielle Lichteffekte erzielt werden.

Ein im Basisteil ausgebildeter Durchbruch wird dann vom Zusatzteil vollständig überspannt, wenn dessen Querschnittsfläche zumindest an einer Stelle vollständig innerhalb eines Bereiches angeordnet ist, welcher durch die periphere äussere Stirnfläche des Zusatzteils umrandet wird. Bevorzugt ist insbesondere die Mündung des Durchbruchs an der Vorder- oder Rückseite, insbesondere an der Vorderseite, des Basisteils vollständig innerhalb eines Bereiches angeordnet, welcher durch die periphere äussere Stirnfläche des Zusatzteils umrandet wird. Bevorzugt gibt es somit keinen Durchgang durch das Zusatzteil hindurch und das Zusatzteil deckt sämtliche Durchbrüche dichtend gegenüber der Deckschicht ab, welche innerhalb des durch die periphere äussere Stirnfläche des Zusatzteils umrandeten Bereiches angeordnet sind bzw. in diesem Bereich an der Vorderseite des Basisteils münden.

Die Deckschicht dient bevorzugt dazu, die Widerstandsfähigkeit des Bauteils gegenüber externen Einflüssen zu erhöhen und/oder eine bestimmte optische Wirkung zu erzielen. Vorteilhaft zeichnet sich das Material der Deckschicht gegenüber dem Material des Basisteils deshalb als besonders kratzfest, chemisch beständig, glänzend und/oder matt aus.

In einer insbesondere bevorzugten Ausführungsform ist das Basisteil oder die Deckschicht im Spritzgussverfahren hergestellt. Vorteilhaft sind sogar sowohl das Basisteil als auch die Deckschicht im Spritzgussverfahren hergestellt. Dabei eignen sich insbesondere Kunststoffe zur Herstellung des Basisteils im Spritzgussverfahren. Die Deckschicht ist vorteilhaft an die Vorderseite des Basisteils angespritzt. Besonders bevorzugt ist das Basisteil an das Zusatzteil angespritzt und die Deckschicht ihrerseits an das Basisteil und das Zusatzteil angespritzt. Auf diese Weise kann das Bauteil einfach hergestellt und gleichzeitig eine gute Einbettung und Abdichtung des Zusatzteils erreicht werden.

Das Basisteil kann eine Schicht bilden, welche mit der Deckschicht laminiert ist. Das Basisteil weist bevorzugt eine zur Sichtseite des Bauteils hin gewandte Vorderseite auf, die von der Deckschicht zu zumindest 20 Prozent, bevorzugt zu zumindest 30 Prozent, bevorzugter zu zumindest 40 Prozent, noch bevorzugter zu zumindest 50 Prozent, noch bevorzugter zu zumindest 75 Prozent, und am bevorzugtesten zu zumindest 95 Prozent, bedeckt wird. Die Deckschicht kann insbesondere sogar die gesamte Vorderseite des Basisteils bedecken, um zum Beispiel das Basisteil besonders gut vor externen Einflüssen zu schützen. Vorzugsweise bildet die Deckschicht die Sichtseite des Bauteils zu zumindest 20 Prozent, bevorzugt zu zumindest 30 Prozent, bevorzugter zu zumindest 40 Prozent, noch bevorzugter zu zumindest 50 Prozent, noch bevorzugter zu zumindest 75 Prozent, und am bevorzugtesten zu zumindest 95 Prozent oder gar zu 100 Prozent.

Das Basisteil kann aus mehreren Schichten gebildet sein. Ebenso kann die Deckschicht aus mehreren Schichten, insbesondere aus mehreren aus Lack hergestellten Schichten, gebildet sein. Bei einer Deckschicht, welche aus mehreren aus Lack hergestellten Schichten hergestellt ist, sind die jeweiligen Schichten vorteilhaft aus unterschiedlichen Lackarten hergestellt.

Das Bauteil bildet bevorzugt ein Dekorelement. Bevorzugt ist es zudem für den Automobilbau und insbesondere als Einstiegs- oder Zierleiste vorgesehen.

Nach einer Weiterbildung der Erfindung ist das Bauteil geeignet für ein Fahrzeug, insbesondere für ein Kraftfahrzeug. Bevorzugt weist ein Fahrzeug, insbesondere ein Kraftfahrzeug, das Bauteil auf. Im Falle, dass das Bauteil für ein Fahrzeug, insbesondere für ein Kraftfahrzeug, geeignet ist, kann das Bauteil insbesondere eine Fensterführungsblende, ein Spoiler, eine Verblendung einer A-, B-, C- oder D-Säule, eine Dreiecksblende, eine Fensterschachtleiste, eine Wasserfangleiste, eine Abdeckung oder Blende im Dachbereich, wie beispielsweise eine Abdeckung eines Panoramadaches, eine Abdeckung oder Blende im Konsolenbereich, eine Abdeckung oder Blende im Bereich des Armaturenbrettes, eine Blende oder Abdeckung im Türbereich, eine Blende oder Abdeckung im Bereich eines Kühlergrills, der Ladekante oder an einer Heckklappe, eine Zier-, Einstiegs- oder Türleiste, ein Emblem, oder eine Stossfängerverkleidung sein.

Beim Bauteil kann es sich um ein Interieurbauteil oder um ein Exterieurbauteil eines Fahrzeugs handeln. Im Falle eines Interieurbauteils ist die Deckschicht bevorzugt aus einem Softlack oder aus einem kratzfesten Lack, bevorzugter aus einem kratzfesten Lack, hergestellt. Im Falle eines Exterieurbauteils ist die Deckschicht bevorzugt aus einem kratzfesten Lack hergestellt. Falls es sich um ein Exterieurbauteil handelt, weist dieses bevorzugt zumindest eine semipermeable Membran auf, um Feuchtigkeit aus dem Bauteil entweichen zu lassen, ohne dass von aussen her Feuchte in das Bauteil eindringen kann. Ausserdem kann das Basisteil im Falle eines Exterieurbauteil insbesondere aus Polycarbonat hergestellt sein mit bevorzugt einer Erweichungstemperatur von mehr als 130°, bevorzugter von mehr als 140° und am bevorzugtesten von ca. 145°.

Nach einer Weiterbildung der Erfindung ist das Bauteil geeignet für ein Haushaltsgerät, wie beispielsweise einen Kühlschrank, einen Dampfgarer, eine Waschmaschine, einen Wäschetrockner, einen Backofen, einen Kochherd, eine Geschirrspülmaschine oder ein Möbel. Bevorzugt weist das Haushaltsgerät oder das Möbel das Bauteil auf.

Nach einer Weiterbildung der Erfindung ist das Bauteil geeignet für Geräte, welche bei Verfahren zur chirurgischen oder therapeutischen Behandlung des menschlichen oder tierischen Körpers Anwendung finden, oder geeignet für Geräte, welche bei Diagnostizierverfahren, die bei menschlichen oder tierischen Körper vorgenommen werden, Anwendung finden. Bevorzugt weist ein solches Gerät das Bauteil auf.

Nach einer Weiterbildung der Erfindung ist das Bauteil geeignet für Konsumgüter, wie beispielsweise eine Kaffeemaschine oder einen Staubsauger, insbesondere für die Konsumgüterelektronik, wie beispielsweise einen Computer, einen Drucker, einen Scanner, einen Kopierapparat, einen Fernseher, einen CD-Spieler oder einen DVD-Spieler. Bevorzugt weist ein solches Konsumgut, insbesondere eine solche Konsumgüterelektronik, das Bauteil auf.

Nach einer Weiterbildung der Erfindung ist das Bauteil geeignet für einen Brausekopf, eine Sanitärarmatur, ein Klosett, eine Dusche oder einen Spühlkasten. Das Bauteil ist beispielsweise ein Bestandteil des Brausekopfes, der Sanitärarmatur, des Klosetts, der Dusche oder des Spühlkastens.

Nach einer Weiterbildung der Erfindung ist das Bauteil als Bedienelement ausgebildet, welches beispielsweise mittels Berührung oder berührungslos bedienbar ist.

Das Basisteil ist bevorzugt wenigstens bereichsweise, bevorzugt vollständig, aus einem Kunststoff hergestellt. Alternativ kann es aber zum Beispiel wenigstens bereichsweise, bevorzugt vollständig, auch aus Metall, Glas, Keramik oder Holz hergestellt sein. Bei gewissen Ausführungsformen kann es sich beim Basisteil auch um eine Folie handeln.

Das Basisteil kann insbesondere im Spritzgiessverfahren wenigstens bereichsweise, bevorzugt vollständig, aus einem Kunststoff hergestellt sein. Im Falle eines Kunststoffes kann der Kunststoff einen Thermoplasten aufweisen oder aus diesem Thermoplasten bestehen, welcher vorzugsweise Polymethylmethacrylat (PMMA), Polystyrol (PS), ein aromatischer Polyester, Polyethylenterephthalat (PET), Polymethacrylmethylimid (PMMI), ein Cyclo-Olefin-Copolymer (COC), ein Cyclo-Olefin-Polymer (COP), ein Styrol-Acrylnitril-Copolymer (SAN), Acrylnitril-Butadien-Styrol (ABS), Acrylester-Styrol-Acrylnitril (ASA), Acrylnitril Butadien Styrol / Polycarbonat (ABS-PC), Polycarbonat (PC), Polycarbonat / Polybutylenterephthalat (PC-PBT), Acrylester-Styrol-Acrylnitril / Polycarbonat (ASA-PC) oder eine Mischung der genannten Substanzen ist. Falls der Kunststoff einen Duroplasten aufweist oder aus einem Duroplasten besteht, so ist dieser Duroplast vorzugweise Polyurethan (PU) oder Polyurea (PUA) oder eine Mischung der genannten Substanzen. Falls der Kunststoff ein Elastomer umfasst oder aus einem Elastomer besteht, so ist dieses Elastomer bevorzugt ein Silikon, bevorzugter ein Silikonkautschuk. Das Basisteil kann während des Spritzgiessens geschäumt werden, um Einfallstellen zu vermeiden. Das Schäumen kann mittels insbesondere unter Einsatz von chemischen und/oder physikalischen Treibmitteln erfolgen.

Das Basisteil und/oder die Deckschicht und/oder das Zusatzteil können wenigstens bereichsweise transluzent oder transparent ausgebildet sein. Das Basisteil und/oder die Deckschicht und/oder das Zusatzteil können insbesondere vollständig transluzent oder transparent ausgebildet sein. Dies erlaubt die Herstellung eines hinterleuchtbaren Bauteils mit vielfältigen optischen Designmöglichkeiten. Das Basisteil und/oder die Deckschicht und/oder das Zusatzteil können aber auch bereichsweise oder vollständig opak ausgebildet sein. Zur Erzielung weiterer optischer Effekte können das Basisteil und/oder die Deckschicht und/oder das Zusatzteil einen Farbstoff, insbesondere Farbpigmente, beinhalten. Der Farbstoff, insbesondere die Farbpigmente, können homogen oder inhomogen innerhalb der Deckschicht und/oder des Basisteils und/oder des Zusatzteils angeordnet sein. Gemäss einer Ausführungsform können die Farbstoffe lumineszierende Farbstoffe, insbesondere fluoreszierende und/oder phosphoreszierende Farbstoffe, sein. Gemäss einer bevorzugten Ausführungsform weist das Basisteil und/oder die Deckschicht und/oder das Zusatzteil einerseits opake und andererseits transluzente oder transparente Bereiche auf. Dies bietet den Vorteil, dass verschiedenste Designvarianten des Bauteils möglich sind. Insbesondere kann von einem Leuchtmittel des Bauteils ausgesandtes Licht selektiv durch die transluzenten oder transparenten Bereiche des Basisteils und/oder der Deckschicht und/oder des Zusatzteils hindurchtreten. Gemäss einer bevorzugten Ausführungsform kann das Basisteil und/oder die Deckschicht und/oder das Zusatzteil wenigstens bereichsweise eine reflektierende Oberfläche aufweisen und/oder wenigstens teilweise aus einem reflektierenden Material hergestellt sein. Durch reflektierende Oberflächen oder reflektierendes Material können beispielsweise Lichtverluste aus dem Bauteil vermindert und/oder Designeffekte erzielt werden.

Gemäss einer Weiterbildung der Erfindung weist das Basisteil, die Deckschicht, das Zusatzteil und/oder ein Lichtleiter des Bauteils eine oder mehrere Lichtumlenkstrukturen auf. Durch das Vorsehen von Lichtumlenkstrukturen kann eine gezielte Lichtumlenkung des vom Leuchtelement ausgestrahlten Lichtes in eine oder mehrere bestimmte Richtungen oder in einen oder mehrere bestimmte Richtungsbereiche erreicht werden. Dadurch, dass die von den Lichtumlenkstrukturen bewirkte Lichtumlenkung gezielt in eine oder mehrere bestimmte Richtungen oder in einen oder mehrere bestimmte Richtungsbereiche erfolgt, können vielfältige spezielle Effekte erzeugt werden, um die Aufmerksamkeit des Betrachters noch besser auf das Bauteil zu lenken. Darüber hinaus kann das vom Leuchtelement ausgestrahlte Licht auf besonders effiziente Art und Weise benutzt werden.

Die eine oder die mehreren Lichtumlenkstrukturen sind bevorzugt in oder am Basisteil, in oder am Zusatzteil und/oder in oder an der Deckschicht angeordnet. Verluste bei der Lichtausbreitung können dadurch minimiert werden. Beispielsweise können die Lichtumlenkstrukturen als lokale chemische oder physikalische Materialveränderungen oder als lokale Oberflächenerhebungen oder -vertiefungen vorgesehen sein. Auch das Einbringen von Fremdmaterialien oder von Lufteinschlüssen zur Ausbildung der Lichtumlenkstrukturen ist denkbar. Die Lichtumlenkstrukturen können insbesondere mittels eines Lasers erzeugt sein.

Falls das Basisteil und/oder das Zusatzteil wenigstens bereichsweise transluzent oder transparent ausgebildet ist, so ist der transluzente oder transparente Bereich bevorzugt aus Kunststoff hergestellt. Der Kunststoff weist bevorzugt wenigstens einen Thermoplasten und/oder wenigstens einen Duroplasten und/oder wenigstens ein Elastomer oder eine Mischung der genannten Substanzen auf. Falls das Basisteil und/oder das Zusatzteil wenigstens bereichsweise transluzent oder transparent ausgebildet ist, so ist gemäss einer bevorzugten Ausführungsform der transluzente oder transparente Bereich des Basisteils aus einem einzigen Thermoplasten, aus einem einzigen Duroplasten oder aus einem einzigen Elastomer hergestellt. Dies bietet den Vorteil, dass das Bauteil kostengünstig herstellbar ist und das Licht keine Materialgrenzflächen überwinden muss.

Falls der Kunststoff, welcher den transluzenten oder transparenten Bereich des Basisteils bzw. des Zusatzteils bildet, einen Thermoplasten aufweist, so ist der Thermoplast beispielsweise Polycarbonat (PC), Polystyrol (PS), ein aromatischer Polyester, Polymethylmethacrylat (PMMA), Polyethylenterephthalat (PET), Polymethacrylmethylimid (PMMI), ein Cyclo-Olefin-Copolymer (COC), ein Cyclo-Olefin-Polymer (COP), ein Styrol-Acrylnitril-Copolymer (SAN) oder eine Mischung der genannten Polymere. Falls der Kunststoff, welcher den transluzenten oder transparenten Bereich des Basisteils bzw. des Zusatzteils bildet, einen Duroplasten aufweist, so ist der Duroplast beispielsweise Polyurethan (PU) oder Polyurea (PUA). Falls der Kunststoff, welcher den transluzenten oder transparenten Bereich des Basisteils bzw. des Zusatzteils bildet, ein Elastomer aufweist, so ist das Elastomer beispielsweise Silikon, insbesondere Silikonkautschuk. Dem Fachmann sind transluzente oder transparente Kunststoffe bekannt. Bei der Verwendung eines Elastomers und insbesondere von Silikon ergibt sich eine gute Anpassbarkeit des Bauteils zum Beispiel an eine Oberfläche eines Fahrzeugs. Polymethylmethacrylat (PMMA) hat sich als besonders gut im Hinblick auf die Bearbeitung mittels eines Lasers, insbesondere zur Herstellung von Lichtumlenkstrukturen, erwiesen. Polycarbonat (PC) kann ebenfalls mittels eines Lasers, insbesondere zur Herstellung von Lichtumlenkstrukturen, bearbeitet werden und haftet zudem gut an einem PUR-basierten Lack. Styrol-Acrylnitril-Copolymer (SAN) ist ebenfalls gut zur Bearbeitung mittels eines Lasers, insbesondere zur Herstellung von Lichtumlenkstrukturen, geeignet und haftet gut an Lack. Gemäss einer bevorzugten Ausführungsform ist das Basisteil und/oder das Zusatzteil wenigstens bereichsweise, bevorzugt vollständig, aus Polycarbonat (PC) hergestellt und die Deckschicht wenigstens bereichsweise, bevorzugt vollständig, aus Polyurethan (PUR) und/oder aus Polyurea (PU) hergestellt. Diese Ausführungsform ist besonders geeignet für ein Bauteil, bei welchem das Basisteil und/oder das Zusatzteil als Lichtleiter ausgebildet ist.

Das Basisteil und/oder das Zusatzteil kann, insbesondere falls es aus Kunststoff hergestellt ist, Additive wie Entformungsmittel, Thermostabilisatoren, UV-Absorber, aber auch Flammschutzmittel, IR-Absorber, Antistatika, Farbmittel etc. enthalten.

Beim Lackmaterial der Deckschicht kann es sich insbesondere um ein hochfluides, das heisst sehr dünnflüssiges Material handeln. Vorteilhaft haftet das Material der Deckschicht am Material des Basisteils. Das Lackmaterial der Deckschicht kann bei der Herstellung chemisch mit dem Material des Basisteils reagieren und dadurch eine besonders feste Bindung mit diesem eingehen. Bevorzugt enthält der Lack Polyurea oder Polyurethan. Der Lack kann ein Einkomponentenlack oder ein Mehrkomponentenlack, insbesondere ein Zweikomponentenlack, sein. Im Falle eines Zweikomponentenlacks ist die erste Komponente beispielsweise Polyol und die zweite Komponente beispielsweise ein Polyisocyanat, so dass aus der Reaktion des Polyols und des Polyisocyanats ein vernetztes Polymer, d.h. Polyurethan, entsteht. Alternativ kann im Falle eines Zweikomponentenlacks die erste Komponente beispielsweise ein Isocyanat und die zweite Komponente beispielsweise ein Amin sein, so dass aus der Reaktion des Isocyanats und des Amins ein vernetztes Polymer, d.h. Polyurea, entsteht. Je nach dem gewünschten Design kann die Lackschicht hochglänzend oder matt sein. Der Lack kann ein Softlack mit bevorzugt einem Härtegrad von weniger als 20 Shore-A sein, welcher bevorzugt gemäss der Norm DIN 53505, Ausgabe vom August 2000, gemessen ist, und/oder ein kratzfester Lack mit bevorzugt einem Härtegrad von 20 Shore-A bis 100 Shore-D, insbesondere von 20 Shore-A bis 65 Shore-D, sein, wobei der Härtegrad jeweils bevorzugt gemäss der Norm DIN 53505, Ausgabe vom August 2000, gemessen ist. Dem Fachmann sind Lacke bekannt.

Die Deckschicht ist bevorzugt unlösbar am Basisteil angebracht, das heisst, dass sie nur durch Beschädigung bzw. Zerstörung vom Basisteil gelöst werden kann.

Die Dicke der Deckschicht liegt bevorzugt in einem Bereich von grösser als 0 bis maximal 12'000 Mikrometer, bevorzugter von grösser als 25 bis maximal 12'000 Mikrometer, noch bevorzugter von grösser als 25 bis maximal 3'000 Mikrometer, noch bevorzugter von grösser als 25 bis maximal 1'000 Mikrometer, noch bevorzugter von grösser als 25 bis maximal 800 Mikrometer, noch bevorzugter von grösser als 25 bis maximal 600 Mikrometer, noch bevorzugter von grösser als 25 bis maximal 400 Mikrometer, noch bevorzugter von grösser als 25 bis maximal 200 Mikrometer, noch bevorzugter von grösser als 25 bis maximal 200 Mikrometer, und am bevorzugtesten von grösser als 25 bis weniger als 100 Mikrometer. Bei einer zu dicken Deckschicht werden die Kosten zur Herstellung des Bauteils hoch. Bei einer zu dünnen Deckschicht wird das Bauteil hingegen anfällig für Kratzer, da sich diese durch die Deckschicht hindurch erstrecken können. Ausserdem kann der physikalische und chemische Schutz des Basisteils durch die Deckschicht dann nicht mehr ausreichend sein. Die angegebenen bevorzugten Dickenbereiche stellen ein Optimum zwischen diesen einander entgegenlaufenden Anforderungen dar.

Bevorzugt ist die Deckschicht über ihre gesamte Flächenerstreckung im Wesentlichen gleich dick. Dies bietet den Vorteil, dass die Sichtseite des Bauteils homogen ausgeleuchtet werden kann. Die Deckschicht kann über ihre Flächenerstreckung aber auch eine variierende Dicke aufweisen. Dies ermöglicht die Erzeugung von verschiedensten Designeffekten. Bei dünneren Deckschichten ist die Helligkeit der Ausleuchtung der Sichtseite grösser als bei Deckschichten mit einer vergleichsweise grösseren Dicke. So können durch Variation der Dicke der Deckschicht, insbesondere falls die Vorderseite des Zusatzteils mit einer Deckschicht bedeckt ist, unterschiedliche Helligkeiten an der Sichtseite des Bauteils erzielt werden.

Falls die Vorderseite des Zusatzteils von der Deckschicht bedeckt ist, so ist die Dicke der Deckschicht im Bereich der Vorderseite des Zusatzteils gemäss einer bevorzugten Ausführungsform geringer als wenigstens die Dicke des Bereiches der Deckschicht, welcher unmittelbar randseitig umlaufend das Zusatzteil kontaktiert. Eine dünnere Deckschicht weist den Vorteil auf, dass die Helligkeit der Ausleuchtung der Sichtseite des Bauteils grösser ist.

Falls die Vorderseite des Zusatzteils von der Deckschicht bedeckt ist, so ist die Dicke der Deckschicht im Bereich der Vorderseite des Zusatzteils gemäss einer anderen bevorzugten Ausführungsform grösser als wenigstens die Dicke des Bereiches der Deckschicht, welcher unmittelbar randseitig umlaufend das Zusatzteil kontaktiert. Eine dickere Deckschicht weist den Vorteil auf, dass die Helligkeit der Ausleuchtung der Sichtseite des Bauteils geringer ist.

Das Basisteil weist bevorzugt eine Dicke von 1 Millimeter oder grösser auf. Dadurch ist eine gewisse strukturelle Stabilität des Basisteils gewährleistet. Um Materialkosten zu sparen, weist das Basisteil bevorzugt jedoch eine maximale Dicke von 10 Millimeter auf. Insbesondere falls das Basisteil aus thermoplastischem Kunststoff im Spritzguss hergestellt ist, weist das Basisteil bevorzugt eine maximale Dicke von 10 Millimeter auf, da bei einer solchen Dicke eine rasche Abkühlung des Basisteils nach dessen Herstellung noch möglich ist.

Beim fertig hergestellten Bauteil schliesst das Basisteil an seinem äusseren Rand, das heisst mit seiner randseitigen Stirnfläche, bevorzugt bündig mit der Deckschicht ab. Dies kann optische aber auch funktionelle Vorteile mit sich bringen, indem aufgrund des bündigen Abschlusses zum Beispiel Schmutzablagerungen reduziert werden können. Der äussere Rand des Basisteils kann zudem dadurch bei der Herstellung im Spritzgussverfahren als Dichtmittel gegenüber dem Lackmaterial der Deckschicht benutzt werden, d.h. der äussere Rand des Basisteils dichtet gegenüber einem Formwerkzeug ab und behindert dadurch eine weitere Ausbreitung des Lackmaterials.

Bevorzugt ist das Zusatzteil zwischen der Deckschicht und dem Basisteil angeordnet. Die Vorderseite des Zusatzteils wird dabei bevorzugt von der Deckschicht bedeckt und die Rückseite zumindest teilweise vom Basisteil. Dadurch kann auf einfache Weise eine optimale Einbettung und Abdichtung des Zusatzteils erreicht werden. Möglich sind aber auch Ausführungsformen, bei denen das Zusatzteil zum Beispiel innerhalb des Basisteils oder sogar zwischen dem Basisteil und einer rückseitig am Basisteil angebrachten Schicht angeordnet ist. Gemäss einer bevorzugten Ausführungsform ist das Zusatzteil, welches zwischen der Deckschicht und dem Basisteil angeordnet ist, in einer Vertiefung aufgenommen, welche an der Vorderseite des Basisteils ausgebildet ist. Das Zusatzteil in der Vertiefung ist bevorzugt bündig zur Vorderseite des Basisteils angeordnet. Bei dieser Ausführungsform ist das Zusatzteil besonders gut vor Umwelteinflüssen geschützt.

Bevorzugt ist an der Rückseite des Basisteils eine Vertiefung ausgebildet, in welche das Zusatzteil aufgenommen ist. Das Zusatzteil in der Vertiefung ist bevorzugt bündig zur Rückseite des Basisteils angeordnet. Bei dieser Ausführungsform ist das Zusatzteil besonders leicht montierbar und besonders gut vor Umwelteinflüssen geschützt.

Gemäss einer bevorzugten Ausführungsform deckt die Deckschicht das Zusatzteil und/oder das Basisteil wenigstens bereichsweise randseitig ab, wobei die Deckschicht in diesem Bereich bevorzugt transluzent oder transparent ausgebildet ist. Dies bietet den Vorteil, dass Licht via den Rand der Deckschicht seitlich aus dem Bauteil ausgekoppelt und somit das Bauteil umstrahlt werden kann.

Gemäss einer Weiterbildung der Erfindung ist das Zusatzteil ein dünnes flächiges Element, insbesondere eine Folie. Die Folie kann beispielsweise hergestellt sein aus Kunststoff und/oder Metall. Eine Folie ist für Abdichtungszwecke besonders gut geeignet, da sie üblicherweise zum Abdecken einer verhältnismässig grossen Fläche bei gleichzeitig geringem Materialaufwand geeignet ist. Die Folie weist vorteilhaft keine Durchbrüche, Risse oder Öffnungen auf. Falls die Folie aus Metall hergestellt ist, so kann die Folie wenigstens einen Durchbruch aufweisen, so dass die Metallfolie lichtdurchlässig ist.

Gemäss einer anderen Weiterbildung der Erfindung handelt es sich beim Zusatzteil um ein funktionales Element, insbesondere um ein elektrisches funktionales Element, wie zum Beispiel eine Leuchtfolie oder einen Sensor. Falls das Zusatzteil ein Sensor ist, kann es sich insbesondere um einen optischer Sensor, beispielsweise einen Infrarotsensor oder Lidarsensor, einen akustischen Sensor, beispielsweise ein Ultraschallsensor, einen elektromagnetischen Sensor, beispielsweise einen induktiven Sensor, kapazitiven Sensor oder Radarsensor, einen Beschleunigungssensor, einen Geschwindigkeitssensor oder einen Sensor zur Erfassung von Umgebungsparametern, beispielsweise einen Temperatursensor, Feuchtigkeitssensor oder Helligkeitssensor, handeln. Der Sensor kann berührungslos oder durch Berührung bedienbar sein. Wenn das Zusatzteil ein funktionales Element ist, erfüllt es neben der Abdichtung der einen oder mehreren Durchbrüche somit zumindest eine weitere Funktion. Im Falle einer Leuchtfolie dient diese vorteilhaft zur Ausleuchtung, Beleuchtung oder Hinterleuchtung des Bauteils, insbesondere der Sichtseite des Bauteils. Die Deckschicht kann dabei transparent oder transluzent ausgebildet sein.

Das Zusatzteil kann, muss aber nicht, einen Teil der Sichtseite des Bauteils bilden. Wenn es einen Teil der Sichtseite des Bauteils bildet, ist es mit seiner Oberfläche vorteilhaft bündig zur Oberfläche der Deckschicht angeordnet. Es entstehen dadurch weniger Schmutzablagerungen.

Insbesondere wenn das Zusatzteil als eine Folie ausgebildet ist, aber auch in anderen Fällen, kann das Zusatzteil gemäss einer Weiterbildung der Erfindung transparent oder transluzent ausgebildet sein, um von einem Leuchtelement hinter- bzw. durchleuchtet zu werden. Das Leuchtelement kann ein Teil des Bauteils darstellen. Das Leuchtelement kann insbesondere an der Rückseite des Basisteils im Bereich eines Durchbruchs angeordnet sein, um die Deckschicht und/oder das Zusatzteil durch den Durchbruch hindurch zu hinterleuchten. Das Leuchtelement kann auch teilweise oder ganz in einen Durchbruch eingesetzt sein. Des Weiteren kann das Leuchtelement zur Hinterleuchtung der Deckschicht und/oder des Zusatzteils durch mehrere Durchbrüche hindurch ausgebildet sein. Hierzu kann an der Rückseite des Basisteils zum Beispiel ein Lichtleiter angeordnet sein, um das vom Leuchtelement ausgestrahlte Licht zu den mehreren Durchbrüchen zu verteilen. Alternativ kann das Leuchtelement auch als ein flächiges Leuchtelement, wie beispielsweise eine Leuchtfolie, wie zum Beispiel eine Elektrolumineszenzfolie oder eine OLED-Folie, ausgebildet sein, welche auf der Rückseite des Basisteils angeordnet ist.

Besondere optische Effekte und insbesondere die Anzeige von Symbolen, Buchstaben, Schriftzügen, Piktogrammen etc. sind möglich, wenn die Deckschicht und/oder das Zusatzteil bereichsweise opak und bereichsweise transparent oder transluzent ausgebildet ist. Wenn die Deckschicht und das Zusatzteil gemeinsam die Sichtseite des Bauteils bilden, ist es aber auch möglich, dass die Deckschicht opak und das Zusatzteil transparent oder transluzent ausgebildet ist (oder umgekehrt), um zum Beispiel Symbole, Buchstaben, Schriftzüge, Piktogramme etc. darzustellen.

Gemäss einer bevorzugten Ausführungsform ist in den Grenzbereichen zwischen dem Basisteil und der Deckschicht wenigstens eine Grenzflächenstruktur angeordnet. Die Grenzflächenstruktur wird bevorzugt durch wenigstens eine ineinandergreifende lokale Erhebung und wenigstens eine Vertiefung der Oberflächen der Deckschicht sowie dem Basisteil gebildet. Die Grenzflächenstruktur bildet beispielsweise wenigstens ein Symbol, wenigstens ein Buchstabe, Schriftzüge, Piktogramme etc., welche bevorzugt für den Betrachter bei Hinterleuchtung des Bauteils erkennbar werden.

Gemäss einer bevorzugten Ausführungsform weist das Bauteil mehrere übereinanderliegende Deckschichten auf, wobei bevorzugt zwischen wenigstens zwei aneinandergrenzenden Deckschichten im Grenzflächenbereich dieser zwei Deckschichten wenigstens eine Grenzflächenstruktur angeordnet ist. Die Grenzflächenstruktur wird bevorzugt durch wenigstens eine ineinandergreifende lokale Erhebung und wenigstens eine Vertiefung der Oberflächen der beiden Deckschichten gebildet. Die Grenzflächenstruktur bildet beispielsweise wenigstens ein Symbol, wenigstens ein Buchstabe, Schriftzüge, Piktogramme etc., welche bevorzugt für den Betrachter bei Hinterleuchtung des Bauteils erkennbar werden.

Gemäss einer bevorzugten Ausführungsform sind im Bereich der Rückseite des Basisteils durch das Basisteil gebildete lokale Erhebungen und/oder Vertiefungen vorgesehen, welche beispielsweise wenigstens ein Symbol, wenigstens ein Buchstabe, Schriftzüge, Piktogramme etc. bilden, und welche bevorzugt für den Betrachter bei Hinterleuchtung des Bauteils erkennbar werden. Bevorzugt ist ein Einsatz, wie beispielsweise ein Kunststoffeinsatz, im Bereich der rückseitigen Erhebungen und/oder Vertiefungen des Basisteils angeordnet, wobei der Einsatz bevorzugt lokale Erhebungen und/oder Vertiefungen aufweist, welche bevorzugt in entsprechende lokale Vertiefungen und/oder Erhebungen des Basisteils eingreifen. Der Einsatz bietet den Vorteil, dass die Designmöglichkeiten des Bauteils erhöht werden. Der Einsatz kann beispielsweise aus einem transluzenten oder transparenten Material oder aus einem opaken Material hergestellt sein. Der Einsatz kann optional beispielsweise Farbstoffe, wie beispielsweise Pigmente, enthalten oder auch als Diffusor ausgebildet sein. Der Einsatz kann auch Lichtumlenkstrukturen aufweisen, welche auf einer Oberfläche des Einsatzes oder innerhalb des Einsatzes angeordnet sind, um beispielsweise das von einem Leuchtelement des Bauteils ausgesandte Licht in die Richtung der Sichtseite des Bauteils umzulenken. Möglich ist ebenfalls, dass der Einsatz eine reflektierende Oberfläche aufweist oder aus einem reflektierenden Material hergestellt ist, um beispielsweise das von einem Leuchtelement des Bauteils ausgesandte Sicht in die Richtung der Sichtseite des Bauteils zu reflektieren.

Das Basisteil und/oder das Zusatzteil und/oder die Deckschicht können als Diffusor ausgebildet sein, um das Licht vor der Auskopplung aus dem Bauteil zu streuen und beispielsweise eine gleichmässige Ausleuchtung oder Hinterleuchtung des Bauteils zu erreichen. Die Diffusorwirkung kann zum Beispiel mittels Einbringen von Partikeln und/oder Pigmenten oder mittels lokalen Materialveränderungen, hervorgerufen zum Beispiel mittels eines Lasers, erreicht werden.

Gemäss einer Weiterbildung der Erfindung kann sich das Zusatzteil über mindestens 50%, bevorzugt über mindestens 70%, noch bevorzugter über mindestens 90% der Vorderseite des Basisteils erstrecken. Das Zusatzteil kann sogar flächendeckend auf der Vorderseite des Basisteils angebracht sein. Es ist dadurch möglich, mittels eines einzigen Zusatzteils, insbesondere einer Folie, sämtliche im Basisteil vorhandene Durchbrüche dichtend abzudecken.

Das Zusatzteil, insbesondere wenn es sich um eine Folie handelt, kann gemäss einer Weiterbildung der Erfindung eine seitliche Stirnfläche des Basisteils zumindest teilweise überdecken. Das Zusatzteil erstreckt sich dann also nicht nur über die Vorderseite des Basisteils, sondern auch über dessen seitliche Stirnfläche. Das Zusatzteil kann sich dabei sogar umlaufend über die seitliche Stirnfläche des Basisteils erstrecken.

Gemäss einer Weiterbildung der Erfindung ist in zumindest einem der vom Zusatzteil dichtend abgedeckten Durchbrüche zumindest teilweise oder vollständig ein Leuchtelement oder ein Sensor eingesetzt. Durch die Anordnung in einem Durchbruch kann das Leuchtelement bzw. der Sensor besonders platzsparend und vor äusseren Einflüssen geschützt untergebracht werden.

Das Zusatzteil kann mittels eines Klebstoffs und/oder mittels eines Haftvermittlers und/oder mittels einer thermoplastischen Folie am Basisteil angebracht sein. Dies bietet den Vorteil, dass während der Herstellung des Bauteils, insbesondere falls das Basisteil an das Zusatzteil angespritzt wird, eine sichere Verbindung über die thermoplastische Folie, den Klebstoff und/oder den Haftvermittler zwischen dem Zusatzteil und dem Basisteil hergestellt werden kann. Die thermoplastische Folie, der Klebstoff und/oder der Haftvermittler ist, falls notwendig, aus einem transluzenten oder transparenten Material hergestellt, so dass Licht durch die thermoplastische Folie, den Klebstoff und/oder den Haftvermittler hindurchtreten kann. Wenn dabei in zumindest einem der vom Zusatzteil dichtend abgedeckten Durchbrüche ein funktionales Element, wie insbesondere ein Sensor oder Leuchtelement, angeordnet ist, ist diese bevorzugt am Klebstoff und/oder am Haftvermittler angebracht. Die Herstellung des Bauteils kann dadurch insbesondere, was das Anbringen des funktionalen Elements angeht, besonders vereinfacht werden.

Gemäss einer bevorzugten Ausführungsform weist die Vorderseite des Bauteils wenigstens eine Vertiefung auf zur Positionierung eines Zusatzteils, bevorzugt zur Positionierung eines mit Positionierelementen versehenen Zusatzteils, welches beispielsweise in Form eines Sensors oder eines Leuchtelementes oder einer Folie vorliegt.

In einer bevorzugten Ausführungsform ist das Basisteil zwischen der Deckschicht und dem Zusatzteil angeordnet. Das Zusatzteil ist dann somit an der Rückseite des Basisteils angebracht. Insbesondere bevorzugt ist das Zusatzteil zudem zwischen dem Basisteil und einer rückseitig zum Zusatzteil angebrachten Schicht angeordnet. Vorteilhaft wird die Schicht bei der Herstellung im Spritzgussverfahren an die Rückseite des Zusatzteils angespritzt und drückt dabei noch vorteilhafter durch den Spritzdruck das Zusatzteil, welches bevorzugt eine Folie ist, in den oder die Durchbrüche des Basisteils hinein. Das Zusatzteil weist hierzu vorteilhaft eine gewisse Flexibilität und Elastizität auf. Das Zusatzteil greift dann also bevorzugt in den oder die Durchbrüche des Basisteils ein. Bevorzugt ist das Zusatzteil dabei innerhalb des bzw. der Durchbrüche bündig zur Vorderseite des Basisteils angeordnet. Zwischen dem Basisteil und dem Zusatzteil kann eine Klebstoffschicht und/oder eine Haftvermittlerschicht angeordnet sein, so dass das Zusatzteil am Basisteil haftet.

Vorzugsweise erstreckt sich das Zusatzteil zumindest teilweise in zumindest einen der vom Zusatzteil dichtend abgedeckten Durchbrüche hinein. Die Abdichtung kann dann zumindest teilweise innerhalb des Durchbruchs erreicht werden.

Das Bauteil kann eines oder mehrere derartiger Zusatzteile aufweisen. Bevorzugt sind dabei sämtliche der einen oder mehreren Durchbrüche des Basisteils von dem einen oder den mehreren der Zusatzteile dichtend abgedeckt.

In gewissen Ausführungsformen können zumindest ein Teil oder sogar alle der vom Zusatzteil dichtend abgedeckten Durchbrüche des Basisteils jeweils einen Hohlraum bilden.

In gewissen Ausführungsformen können zumindest ein Teil oder sogar alle der vom Zusatzteil dichtend abgedeckten Durchbrüche des Basisteils jeweils zumindest teilweise, bevorzugt vollständig, mit einem Füllmaterial ausgefüllt sein. Das Füllmaterial stellt bevorzugt ein anderes Material dar als dasjenige des Basisteils. Das Füllmaterial ist bevorzugt transluzent oder transparent ausgebildet. Bevorzugt bildet das Füllmaterial einen Bereich eines Lichtleiters des Bauteils. Gemäss einer bevorzugten Ausführungsform ist im Füllmaterial ein Leuchtelement und/oder ein Sensor eingebettet. Gemäss einer weiteren bevorzugten Ausführungsform ist das Füllmaterial als Diffusor ausgebildet. Nach einer weiteren Ausführungsform sind innerhalb und/oder an einer Oberfläche des Füllmaterials Lichtumlenkstrukturen angeordnet.

Gemäss einer bevorzugten Ausführungsform weist das Bauteil ein an der Rückseite des Basisteils angeordnetes Gehäuse auf. Das Gehäuse dient beispielsweise zur Aufnahme wenigstens eines Leuchtelementes und/oder wenigstens eines Sensors. Das Gehäuse weist in einer bevorzugten Ausführungsform eine reflektierende Oberfläche auf oder ist aus einem reflektierenden Material hergestellt, um von einem Leuchtmittel des Bauteils ausgesandtes Licht beispielsweise in die Richtung der Sichtseite des Bauteils zu reflektieren. Das Gehäuse ist bevorzugt aus einem opaken Material hergestellt. Das Gehäuse kann aber auch aus einem transluzenten Material oder aus einem transparenten Material hergestellt sein, so dass Licht eines Leuchtelementes über das Gehäuse aus dem Bauteil austreten kann.

Gemäss einer bevorzugten Ausführungsform weist das Basisteil und/oder das Gehäuse wenigstens ein Befestigungselement auf zur bevorzugt lösbaren Befestigung des Gehäuses am Basisteil. Das Gehäuse kann auch mittels eines Klebstoffes und/oder mittels eines Haftvermittlers und/oder mittels eines Dichtschaumes am Basisteil, bevorzugt unlösbar, befestigt sein. Gemäss einer bevorzugten Ausführungsform ist das Gehäuse wenigstens bereichsweise an die Rückseite des Basisteils, bevorzugt mittels eines Spritzgussverfahrens oder mittels eines Extrusionsverfahrens, angespritzt.

Die vorliegende Erfindung bezieht sich ausserdem auf ein Verfahren zur Herstellung eines Bauteils, insbesondere eines Bauteils wie es oben beschrieben wurde. Das Bauteil weist ein Basisteil mit einer Vorderseite und einer Rückseite sowie mit einem oder mehreren Durchbrüchen auf, welche sich von der Rückseite bis zur Vorderseite des Basisteils erstrecken. Das Verfahren weist zumindest die folgenden Schritte auf:
- Anbringen eines als Abdeckelement ausgebildeten Zusatzteils am Basisteil derart, dass das Zusatzteil sämtliche der einen oder mehreren Durchbrüche des Basisteils, die vom Zusatzteil vollständig überspannt werden, dichtend abdeckt; sowie
- Anbringen einer aus einem Lack hergestellten Deckschicht auf der Vorderseite des Basisteils derart, dass die Deckschicht zumindest einen Teil einer Sichtseite des Bauteils bildet und zudem das Zusatzteil kontaktiert.

Das Zusatzteil wird dabei derart am Basisteil angebracht, dass es im fertig hergestellten Bauteil, bevorzugt von der Deckschicht und/oder vom Basisteil, randseitig umlaufend vollständig abgedeckt ist.

Bei einer insbesondere bevorzugten Ausführungsform wird das Basisteil im Spritzgussverfahren und vorteilhaft mittels eines Kunststoffmaterials hergestellt. Hierzu wird bevorzugt mittels eines ersten und eines zweiten Formteils eine Kavität gebildet, in welche das Kunststoffmaterial eingespritzt wird. Das zweite Formteil wird dabei bevorzugt auch zur Herstellung der Deckschicht verwendet, wobei das Basisteil vorteilhaft nicht vom zweiten Formteil entfernt wird. Nach erfolgter Herstellung des Basisteils kann das erste Formteil oder ein bewegliches Element davon zum Beispiel etwas verschoben werden, um die Kavität zur Herstellung der Deckschicht zu erweitern. Alternativ ist auch die Verwendung eines anderen Formteils zur Herstellung der Deckschicht möglich, welches das erwähnte erste Formteil zwecks Kavitätserweiterung ersetzt.

Gemäss einer bevorzugten Ausführungsform wird der eine Durchbruch oder werden die mehreren Durchbrüche mit wenigstens einem Formteileinsatz hergestellt, welcher in der von dem ersten Formteil und dem zweiten Formteil gebildeten Kavität angeordnet ist. Dies bietet den Vorteil, dass auf eine flexible Art und Weise Basisteile mit unterschiedlichen Durchbrüchen hergestellt werden können. Im Falle von wenigstens zwei Formteilleinsätzen sind diese bevorzugt einander gegenüberliegend in der Kavität angeordnet.

Vorteilhaft, um eine effiziente und somit kostengünstige Herstellung zu ermöglichen, werden das Basisteil und die Deckschicht in aufeinanderfolgenden oder parallel laufenden Prozessen auf einer Spritzgussmaschine hergestellt. Die Spritzgussmaschine weist hierzu vorteilhaft eine Wendeplatte oder eine Verschiebplatte auf, um das Basisteil nach seiner erfolgten Herstellung zu drehen bzw. zu verschieben und in der gedrehten oder verschobenen Position mit einer anderen Formhälfte eine Kavität zur Erzeugung der Deckschicht zu bilden. Das Basisteil und die Deckschicht, allenfalls von unterschiedlichen Bauteilexemplaren, können dann also zyklusweise und zyklusgleich hergestellt werden. Entsprechende Wendeplatten-, Schiebetisch- oder Drehtisch-Schliesseinheiten sind dem Fachmann aus dem Stand der Technik zur Genüge bekannt. Alternativ ist auch die Herstellung Basisteils und/oder der Deckschicht mittels Extrusion möglich. Optional kann zum Beispiel mittels Extrusion eine Schutzschicht, insbesondere eine Schutzfolie, auf die Deckschicht aufgebracht werden, welche bevorzugt von der Deckschicht ablösbar ist. Selbstverständlich kann das Bauteil auch mittels Kombination von Spritzguss und Extrusion hergestellt werden.

Selbstverständlich ist es auch möglich, zur Herstellung des Basisteils Formteile zu verwenden, welche dann zum Anbringen der Deckschicht an das Basisteil durch ein anderes Spritzgusswerkzeug mit anderen Formteilen ersetzt werden. Das Basisteil kann somit insbesondere ein vorkonfektioniertes Basisteil sein, welches zur Herstellung der Deckschicht in ein Spritzgusswerkzeug eingelegt wird. Das Basisteil ist in diesem Fall beim Einspritzen des Lackes vorteilhaft bereits vollständig ausgehärtet. Falls das Basisteil jedoch bereits mit Hilfe desselben Formteils hergestellt wurde, kann es beim Einspritzen des Lackes noch nicht vollständig ausgehärtet sein, zum Beispiel um die Anbindung der Deckschicht zu verbessern.

Das Zusatzteil wird bevorzugt nach der Herstellung des Basisteils an diesem angebracht und dann vom Lack der Deckschicht umspritzt. Möglich ist aber auch, dass das Zusatzteil vom Material des Basisteil bei dessen Herstellung umspritzt wird, oder dass das Material des Basisteils an das Zusatzteil angespritzt wird, wodurch vorteilhaft eine feste Verbindung zu diesem entsteht.

Gemäss einer bevorzugten Ausführungsform liegt das Zusatzteil auf wenigstens einem Vorsprung auf, welcher in der durch das erste Formteil und das zweite Formteil gebildeten Kavität angeordnet ist und/oder das Zusatzteil liegt in wenigstens einer Vertiefung mit seitlichen Begrenzungen, welche durch in der Kavität angeordneten Vorsprünge gebildet werden, wobei die Begrenzungen bevorzugt wenigstens teilweise, bevorzugter vollständig, randseitig umlaufend um das Zusatzteil ausgebildet sind und/oder das Zusatzteil liegt in wenigstens einer Vertiefung, welche vom ersten und/oder zweiten Formteil gebildet wird. Dies bietet den Vorteil, dass das Zusatzteil besonders gut in der Kavität positioniert werden kann.

Der Durchbruch oder die mehreren Durchbrüche werden vorteilhaft bereits während der Herstellung des Basisteils, insbesondere während der Herstellung des Basisteils mittels des Spritzgussverfahrens, ausgebildet, zum Beispiel mittels entsprechend in der durch das erste Formteil und das zweite Formteil gebildeten Kavität angeordneten Vorsprung bzw. Vorsprüngen. Alternativ oder zusätzlich kann der Durchbruch oder können die Durchbrüche beispielsweise auch mittels Ätzen, Stanzen, Lasern oder Bohren ausgebildet werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittansicht eines schematisch dargestellten Bauteils gemäss einer ersten erfindungsgemässen Ausführungsform;
- Fig. 2: eine Schnittansicht eines schematisch dargestellten Bauteils gemäss einer zweiten erfindungsgemässen Ausführungsform;
- Fig. 3: eine Schnittansicht eines schematisch dargestellten Bauteils gemäss einer dritten erfindungsgemässen Ausführungsform;
- Fig. 4: eine Schnittansicht eines schematisch dargestellten Bauteils gemäss einer vierten erfindungsgemässen Ausführungsform;
- Fig. 5: eine Schnittansicht eines schematisch dargestellten Bauteils gemäss einer fünften erfindungsgemässen Ausführungsform;
- Fig. 6: eine Schnittansicht eines schematisch dargestellten Bauteils gemäss einer sechsten erfindungsgemässen Ausführungsform;
- Fig. 7: eine Schnittansicht eines schematisch dargestellten Bauteils gemäss einer siebten erfindungsgemässen Ausführungsform;
- Fig. 8: eine Schnittansicht eines schematisch dargestellten Bauteils gemäss einer achten erfindungsgemässen Ausführungsform;
- Fig. 9: eine Schnittansicht eines schematisch dargestellten Bauteils gemäss einer neunten erfindungsgemässen Ausführungsform;
- Fig. 10: eine Schnittansicht eines schematisch dargestellten Bauteils gemäss einer zehnten erfindungsgemässen Ausführungsform;
- Fig. 11: eine Schnittansicht eines schematisch dargestellten Bauteils gemäss einer elften erfindungsgemässen Ausführungsform;
- Fig. 12: eine Schnittansicht eines schematisch dargestellten Bauteils gemäss einer zwölften erfindungsgemässen Ausführungsform;
- Fig. 13: eine Schnittansicht durch ein schematisch dargestelltes, geschlossenes Spritzgusswerkzeug bei der Herstellung eines Bauteils gemäss einer dreizehnten erfindungsgemässen Ausführungsform;
- Fig. 14: eine Schnittansicht durch ein schematisch dargestelltes, geöffnetes Spritzgusswerkzeug bei der Herstellung eines Bauteils gemäss einer vierzehnten erfindungsgemässen Ausführungsform;
- Fig. 15: eine Schnittansicht durch ein schematisch dargestelltes, geschlossenes Spritzgusswerkzeug bei der Herstellung eines Bauteils gemäss einer fünfzehnten erfindungsgemässen Ausführungsform;
- Fig. 16: eine Schnittansicht durch ein schematisch dargestelltes, geschlossenes Spritzgusswerkzeug bei der Herstellung eines Bauteils gemäss einer sechzehnten erfindungsgemässen Ausführungsform;
- Fig. 17: eine Schnittansicht durch ein schematisch dargestelltes, geschlossenes Spritzgusswerkzeug bei der Herstellung eines Bauteils gemäss einer siebzehnten erfindungsgemässen Ausführungsform;
- Fig. 18a: eine Schnittansicht durch ein schematisch dargestelltes, geöffnetes Spritzgusswerkzeug mit darin angeordneter Folie bei der Herstellung eines Bauteils gemäss einer achtzehnten erfindungsgemässen Ausführungsform;
- Fig. 18b: eine schematische Schnittansicht durch das geschlossene Spritzgusswerkzeug der Fig. 18a mit darin angeordneter Folie unmittelbar vor dem Einspritzen des Materials des Basisteils;
- Fig. 18c: eine schematische Schnittansicht durch das geschlossene Spritzgusswerkzeug der Fig. 18a mit darin angeordneter Folie und eingespritztem Material des Basisteils;
- Fig. 18d: eine schematische Schnittansicht des Basisteils mit daran angebrachter Folie nach der Entnahme aus dem Spritzgusswerkzeug der Fig. 18a;
- Fig. 18e: eine Schnittansicht durch ein weiteres schematisch dargestelltes, geschlossenes Spritzgusswerkzeug mit darin angeordnetem Basisteil und Folie unmittelbar vor dem Einspritzen des Lackes zur Herstellung der Deckschicht;
- Fig. 18f: eine schematische Schnittansicht des Basisteils mit daran angebrachter Folie und Deckschicht nach der Entnahme aus dem Spritzgusswerkzeug der Fig. 18e und vor dem Einsetzen eines Leuchtelements und eines Sensors;
- Fig. 18g: eine schematische Schnittansicht des erfindungsgemässen Bauteils gemäss einer achtzehnten Ausführungsform;
- Fig. 19a: eine Schnittansicht durch ein schematisch dargestelltes, geöffnetes Spritzgusswerkzeug mit darin angeordneten Folien bei der Herstellung eines Bauteils gemäss einer neunzehnten erfindungsgemässen Ausführungsform;
- Fig. 19b: eine schematische Schnittansicht durch das geschlossene Spritzgusswerkzeug der Fig. 19a mit darin angeordneten Folien unmittelbar vor dem Einspritzen des Materials des Basisteils;
- Fig. 19c: eine schematische Schnittansicht durch das geschlossene Spritzgusswerkzeug der Fig. 19a mit darin angeordneten Folien und eingespritztem Material des Basisteils;
- Fig. 19d: eine schematische Schnittansicht des Basisteils mit daran angebrachten Folien nach der Entnahme aus dem Spritzgusswerkzeug der Fig. 19a;
- Fig. 19e: eine Schnittansicht durch ein weiteres schematisch dargestelltes, geschlossenes Spritzgusswerkzeug mit darin angeordnetem Basisteil und Folien unmittelbar vor dem Einspritzen des Lackes zur Herstellung der Deckschicht;
- Fig. 19f: eine schematische Schnittansicht des erfindungsgemässen Bauteils gemäss einer neunzehnten Ausführungsform;
- Fig. 20a: eine Schnittansicht durch ein schematisch dargestelltes, geöffnetes Spritzgusswerkzeug bei der Herstellung eines Bauteils gemäss einer zwanzigsten erfindungsgemässen Ausführungsform;
- Fig. 20b: eine schematische Schnittansicht durch das geschlossene Spritzgusswerkzeug der Fig. 20a unmittelbar vor dem Einspritzen des Materials des Basisteils;
- Fig. 20c: eine schematische Schnittansicht des Basisteils nach der Entnahme aus dem Spritzgusswerkzeug der Fig. 20a und vor dem Anbringen einer Folie und eines Sensors;
- Fig. 20d: eine schematische Schnittansicht des Basisteils mit daran angebrachter Folie und Sensor;
- Fig. 20e: eine Schnittansicht durch ein weiteres schematisch dargestelltes, geschlossenes Spritzgusswerkzeug mit darin angeordnetem Basisteil, Folie und Sensor unmittelbar vor dem Einspritzen des Lackes zur Herstellung der Deckschicht;
- Fig. 20f: eine schematische Schnittansicht des erfindungsgemässen Bauteils gemäss einer zwanzigsten Ausführungsform;
- Fig. 21a: eine Schnittansicht durch ein schematisch dargestelltes, geschlossenes Spritzgusswerkzeug mit darin angeordneter Deckschicht und Folien bei der Herstellung eines Bauteils gemäss einer einundzwanzigsten erfindungsgemässen Ausführungsform;
- Fig. 21b: eine schematische Schnittansicht durch das geschlossene Spritzgusswerkzeug der Fig. 21a mit darin angeordneter Deckschicht und Folien und eingespritztem Material des Basisteils;
- Fig. 21c: eine schematische Schnittansicht des Basisteils mit daran angebrachter Deckschicht und Folien nach der Entnahme aus dem Spritzgusswerkzeug der Fig. 21a;
- Fig. 21d: eine Schnittansicht durch ein weiteres schematisch dargestelltes, geschlossenes Spritzgusswerkzeug mit darin angeordnetem Basisteil, Folien und Deckschicht unmittelbar vor dem Einspritzen des Lackes zur Herstellung einer weiteren Deckschicht;
- Fig. 21e: eine schematische Schnittansicht des erfindungsgemässen Bauteils gemäss einer einundzwanzigsten Ausführungsform;
- Fig. 22a: eine schematische Schnittansicht durch ein noch nicht fertig hergestelltes Basisteil bei der Herstellung eines Bauteils gemäss einer zweiundzwanzigsten erfindungsgemässen Ausführungsform;
- Fig. 22b: eine schematische Schnittansicht durch das Basisteil der Fig. 22a, nach dem Ausbilden von Durchbrüchen;
- Fig. 22c: eine schematische Schnittansicht durch das Basisteil der Fig. 22a mit daran angebrachtem Klebstoff und/oder angebrachten Haftvermittler;
- Fig. 22d: eine schematische Schnittansicht durch das Basisteil der Fig. 22a mit daran angebrachtem Klebstoff und/oder angebrachten Haftvermittler und Folie;
- Fig. 22e: eine schematische Schnittansicht durch ein Spritzgusswerkzeug mit dem darin eingelegten Basisteil inkl. Klebstoff und/oder angebrachten Haftvermittler und Folie der Fig. 22d unmittelbar vor dem Einspritzen eines Kunststoffmaterials zur Herstellung einer Kunststoffschicht;
- Fig. 22f: eine schematische Schnittansicht durch das Spritzgusswerkzeug der Fig. 22e nach dem Einspritzen des Kunststoffmaterials;
- Fig. 22g: eine Schnittansicht durch ein weiteres schematisch dargestelltes, geschlossenes Spritzgusswerkzeug mit darin angeordnetem Basisteil inkl. Folie, Deckschicht und Kunststoffschicht unmittelbar vor dem Einspritzen des Lackes zur Herstellung einer Deckschicht;
- Fig. 22h: eine schematische Schnittansicht des erfindungsgemässen Bauteils gemäss einer zweiundzwanzigsten Ausführungsform;
- Fig. 23a: eine Schnittansicht eines schematisch dargestellten Bauteils gemäss einer dreiundzwanzigsten erfindungsgemässen Ausführungsform; sowie
- Fig. 23b: eine Schnittansicht eines schematisch dargestellten Beleuchtungsmoduls zum Einsetzen in das Bauteil der Fig. 23a.

### BESCHREIBUNG BEVORZUGTER AUSFÜHRUNGSFORMEN

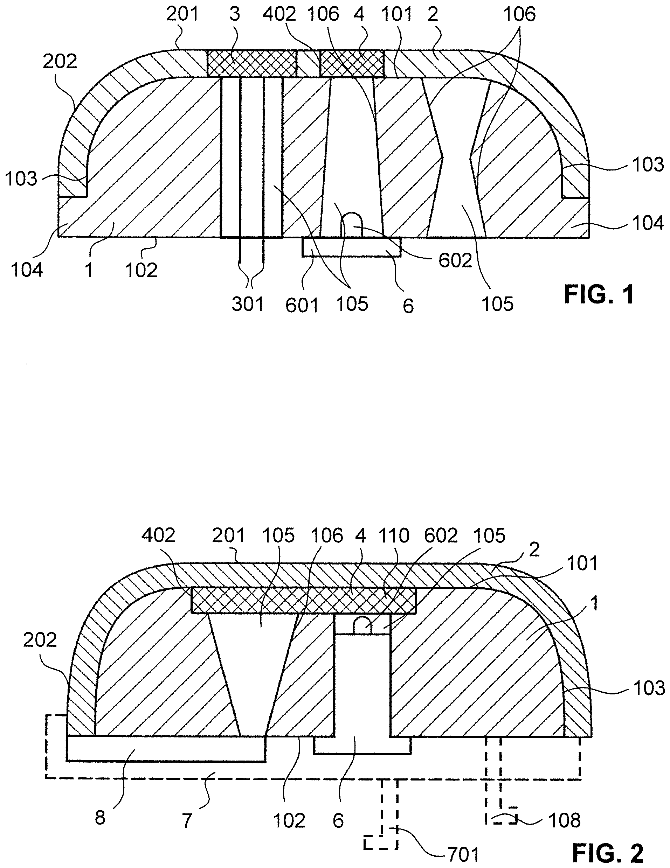

In den Figuren 1 bis 23b sind unterschiedliche Ausführungsformen von erfindungsgemässen Bauteilen sowie Varianten davon und bevorzugte Verfahren zu deren Herstellung beispielhaft illustriert. Merkmale, welche eine identische oder zumindest ähnliche Ausgestaltung und/oder Funktion aufweisen, sind in den Figuren 1 bis 23b jeweils mit denselben Bezugszeichen versehen. Die dargestellten Ausführungsformen dienen lediglich zur Illustration von möglichen Varianten von erfindungsgemässen Bauteilen sowie deren Herstellverfahren. Einzelne oder mehrere Elemente der verschiedenen Ausführungsformen und Herstellverfahren sind beliebig mit den Elementen von anderen Ausführungsformen bzw. Herstellverfahren kombinierbar. Die dargestellten Ausführungsformen und Herstellverfahren sind in keiner Weise als einschränkend zu verstehen.

Die Figur 1 zeigt eine Ausführungsform mit einem als Trägerteil ausgebildeten Basisteil 1. Das Basisteil 1 weist eine beim bestimmungsgemässen Einbau des Bauteils dem Betrachter zugewandte Vorderseite 101 sowie eine der Vorderseite 101 abgewandte Rückseite 102 auf. Am äusseren Rand des Basisteils 1 verbindet eine umlaufende seitliche Stirnfläche 103 die Vorderseite 101 mit der Rückseite 102. Der Übergang von der Vorderseite 101 zur seitlichen Stirnfläche 103 erfolgt dabei gerundet. Im Bereich des Übergangs der seitlichen Stirnfläche 103 zur Rückseite 102 erstreckt sich seitlich umlaufend ein randseitiger Vorsprung 104 nach aussen hin.

Im Basisteil 1 sind mehrere Durchbrüche 105 ausgebildet, welche sich jeweils durchgehend von der Rückseite 102 zur Vorderseite 101 erstrecken. Während der in der Fig. 1 ganz links angeordnete Durchbruch 105 in der Querschnittsansicht röhrenförmig bzw. zylindrisch ausgestaltet ist, sind die beiden rechts davon angeordneten Durchbrüche 105 jeweils konisch ausgestaltet, das heisst sie bilden jeweils zumindest einen Konus 106. Der ganz rechts angeordnete Durchbruch 105 weist sogar eine doppelkonische Gestalt mit zwei sich nach aussen hin jeweils aufweitenden Koni 106 auf. Eine konische Ausgestaltung der Durchbrüche 105 kann einerseits das Entformen des Basisteils 1 aus einem Spritzgusswerkzeug erleichtern und andererseits das Einsetzen von z.B. funktionalen Elementen in den Durchbruch 105 vereinfachen oder es können spezielle Leuchteffekte erzielt werden. Selbstverständlich können die Durchbrüche des erfindungsgemässen Bauteils beliebige Formen aufweisen, solange diese herstellbar sind.

Die Mündungen der beiden in der Fig. 1 links angeordneten Durchbrüche 105 sind an der Vorderseite 101 des Basisteils 1 jeweils mit einem Zusatzteil in Form einer Leuchtfolie 3 bzw. einer transparenten oder transluzenten Folie 4 dichtend abgedeckt. Die Leuchtfolie 3 und die Folie 4 überspannen jeweils einen einzelnen Durchbruch 105 vollständig. Anstelle einer Leuchtfolie 3 könnte auch ein anderes elektrisches funktionales Element wie zum Beispiel ein Sensor vorgesehen sein. Elektrische Kabel 301 sind von der Leuchtfolie 3 durch den Durchbruch 105 zur Rückseite 102 und aus dem Basisteil 1 herausgeführt. Im Bereich der rückseitigen Mündung des mit der transparenten oder transluzenten Folie 4 abgedeckten Durchbruchs 105 ist ein Leuchtelement 6 derart angeordnet, dass davon ausgestrahltes Licht die Folie 4 durch den Durchbruch 105 hindurch hinterleuchten kann. Eine auf einer Platine 601 aufgesetzte LED 602 des Leuchtelements 6 ragt hierzu in den Durchbruch 105 hinein.

Die Vorderseite 101 sowie ein Teil der seitlichen Stirnfläche 103 sind mit einer aus einem Lack hergestellten Deckschicht 2 bedeckt. Die Deckschicht 2 bildet zusammen mit der Leuchtfolie 3 und der Folie 4 eine Sichtseite 201 des Bauteils. Aufgrund der Deckschicht 2 kann das Bauteil besondere optische Eigenschaften, wie z.B. ein Hochglanzoberfläche, aufweisen und/oder kann besonders widerstandsfähig gegen äussere Einflüsse gemacht werden. Die Deckschicht 2 erstreckt sich umlaufend über die seitliche Stirnfläche 103 bis zum randseitigen Vorsprung 104. Die Oberfläche der Deckschicht 2 schliesst dabei bündig mit der äusseren Stirnfläche des randseitigen Vorsprungs 104 ab. Ebenso ist die Oberfläche der Deckschicht 2 im Bereich von deren Rand 202 jeweils bündig zu den Oberflächen der Leuchtfolie 3 und der Folie 4 angeordnet. Aufgrund dieser bündigen Anordnungen erweckt das Bauteil nicht nur einen hochwertigeren Eindruck, sondern es werden auch Schmutzablagerungen verringert.

Die Leuchtfolie 3 und die Folie 4 weisen jeweils dieselbe Dicke wie die Deckschicht 2 auf und werden an ihrem äusseren Rand 402, d.h. an ihren seitlichen Stirnflächen, jeweils umlaufend von der Deckschicht 2 abgedeckt.

Ein weiteres Leuchtelement kann zur Ausleuchtung des ganz rechts in der Fig. 1 angeordneten Durchbruchs 105 vorgesehen sein, falls die Deckschicht 2 aus einem transparenten oder transluzenten Material hergestellt ist. Alternativ kann die Deckschicht 2 aus einem opaken Material und das Basisteil 1 aus einem transparenten oder transluzenten Material hergestellt sein. Das Bauteil würde dann via den umlaufenden randseitigen Vorsprung 104 umleuchtet, wodurch sich in Bezug auf die Deckschicht 2 ein besonderer schwebender Effekt ergeben würde.

Die Ausführungsform der Figur 2 unterscheidet sich u.a. dadurch von derjenigen der Fig. 1, dass eine einzelne transparente oder transluzente Folie 4 vorhanden ist, welche sämtliche im Basisteil 1 ausgebildeten Durchbrüche 105 vollständig überspannt und dichtend abdeckt. Des Weiteren bildet die Folie 4 nicht einen Teil der Sichtseite 201 des Bauteils, sondern die Sichtseite 201 wird ausschliesslich durch die Deckschicht 2 gebildet. Die Folie 4 ist zwischen der Deckschicht 2 und dem Basisteil 1 angeordnet, wobei sie in einer Vertiefung 110 aufgenommen ist, die an der Vorderseite 101 des Basisteils 1 ausgebildet ist.

Ein erster Durchbruch 105 des in der Fig. 2 dargestellten Bauteils hat die Form eines Konus' 106, der sich zur Folie 4 hin aufweitet. Ein zweiter Durchbruch 105 ist zylinderförmig ausgestaltet. In diesen zweiten Durchbruch 105 ist derart ein Leuchtelement 6 eingesetzt, dass sich deren LED 602 unmittelbar unterhalb der Folie 4 befindet uns ansonsten den Durchbruch 105 weitgehend ausfüllt.

Die Deckschicht 2 erstreckt sich hier umlaufend über die gesamte seitliche Stirnfläche 103 des Basisteils bis zur Rückseite 102.

Auf der Rückseite 102 des Basisteils 1 ist eine Leuchtfolie 8 angebracht. Das Basisteil 1 und die Deckschicht 2 sind bei der Ausführungsform der Fig. 2 vorteilhaft transparent oder transluzent ausgebildet und können dadurch von der Leuchtfolie 8 durch- bzw. hinterleuchtet werden. Die Folie 4 kann eingefärbt sein und/oder aufgrund ihrer Form z.B. ein Symbol oder einen Schriftzug bilden.

Zur Befestigung des Bauteils z.B. am Chassis eines Fahrzeugs und/oder zum Verhindern, dass Licht seitlich und nach hinten aus dem Bauteil austreten kann, ist an der Rückseite 102 des Basisteils 1 ein Gehäuse 7 angebracht (in der Fig. 2 gestrichelt dargestellt). Zur Befestigung des Bauteils an einer externen Struktur können Befestigungselemente 108 und 701 am Basisteil 1 und/oder am Gehäuse 7 angebracht sein.

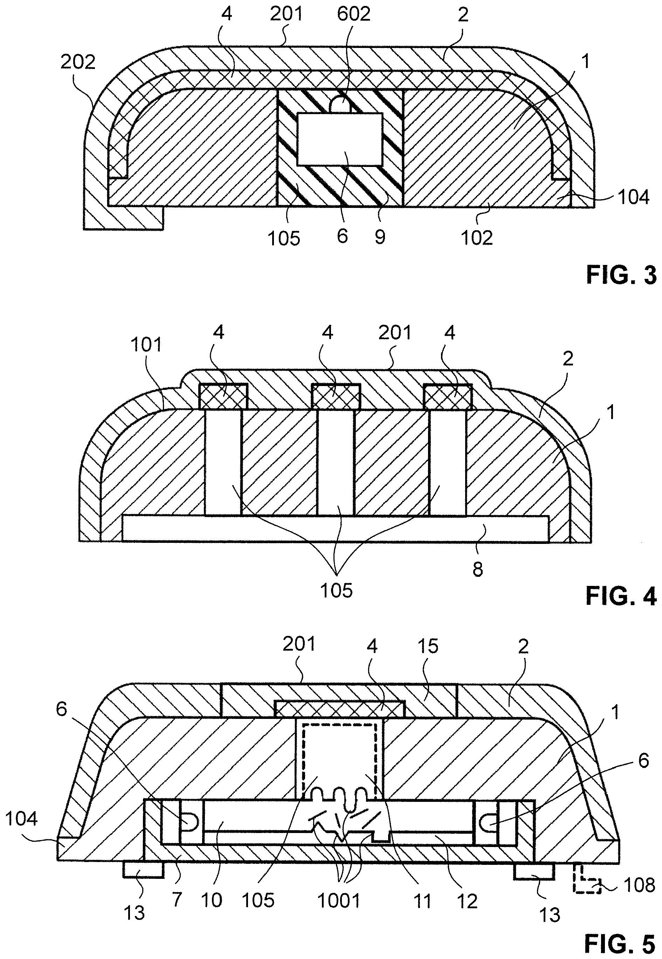

Bei der in der Figur 3 gezeigten Ausführungsform ist ein Leuchtelement 6 vollständig im Inneren eines Durchbruchs 105 angeordnet. Der Durchbruch 105 ist zudem mit einem transparenten oder transluzenten Füllmaterial 9 aufgefüllte, welches das Leuchtelement 6 vollständig umgibt und dadurch schützt. Die Folie 4 und die Deckschicht 2 sind bevorzugt jeweils transparent oder transluzent ausgebildet.

In der Figur 3 ist zudem gezeigt, dass sich die Deckschicht 2 auch über die Rückseite 102 des Basisteils 1 hinweg erstrecken kann.

Bei der Ausführungsform der Figur 4 sind mehrere Zusatzteile in Form von Folien 4 vorhanden, welche jeweils einen zylinderförmigen Durchbruch 105 des Basisteils 1 dichtend abdecken. Auf die Vorderseite 101 des Basisteils 1 ist eine Deckschicht 2 aus Lack aufgespritzt, welche die Folien 4 jeweils komplett zur Sichtseite hin sowie randseitig abdeckt. An der Rückseite des Basisteils 1 ist eine Vertiefung ausgebildet, in welche eine Leuchtfolie 8 aufgenommen ist, die zur Hinterleuchtung der Folien 4 durch die Durchbrüche 105 hindurch dient. Die Deckschicht 2, nicht unbedingt jedoch das Basisteil 1, ist hier bevorzugt transparent oder transluzent ausgebildet.

Das Basisteil 1 der Ausführungsform der Figur 5 weist einen einzigen, zentralen Durchbruch 105 auf, welcher von einer transparenten, transluzenten oder opaken Folie 4 abgedeckt ist. Die Folie 4 ist ihrerseits von einer transparenten oder transluzenten Deckschicht 15 aus Lack zur Sichtseite sowie zum Rand hin abgedeckt. Ausserhalb der Deckschicht 15 ist eine weitere Deckschicht 2, welche opak sein kann, am Basisteil 1 angebracht. In einer an der Rückseite des Basisteils 1 ausgebildeten Vertiefung ist ein Beleuchtungsmodul eingesetzt, das zur Hinterleuchtung der Deckschicht 15 dient. Das Beleuchtungsmodul kann zur Hinterleuchtung der Deckschicht 15 direkt durch den Durchbruch 105 hindurch dienen, falls die Folie 4 transparent oder transluzent ausgebildet ist. Falls die Folie 4 opak ist, kann das Beleuchtungsmodul auch zur Hinterleuchtung der Deckschicht 15 durch das Basisteil 1 hindurch dienen, welches in diesem Fall transparent oder transluzent wäre.

Das Beleuchtungsmodul weist ein Gehäuse 7 auf, dessen Inneres mittels eines Dichtschaums 13 zum Basisteil 1 hin und somit gegen aussen abgedichtet ist. Im Gehäuse 7 ist ein Lichtleiter 10 sowie eines oder mehrere Leuchtelemente 6 angeordnet, welche zum Einstrahlen von Licht in den Lichtleiter 10 dienen. An der Rückseite des Lichtleiters 10 ist im Gehäuse 7 eine Reflektorfolie 12 angeordnet, welche dazu dient, sich im Lichtleiter 10 ausbreitendes Licht zur Sichtseite 201 hin zu reflektieren. Im Inneren des Durchbruchs 105 kann ein weiterer Lichtleiter 11 vorgesehen sein (in der Fig. 5 gestrichelt dargestellt).

Im Inneren und/oder an der Oberfläche des Lichtleiters 10 können zudem insbesondere im Bereich des Durchbruchs 105 Lichtumlenkstrukturen 1001 vorgesehen sein, um das Licht zur Sichtseite 201 hin umzulenken und aus dem Lichtleiter 10 auszukoppeln. Die Lichtumlenkstrukturen können im Inneren des Lichtleiters 10 als Volumenstrukturen vorgesehen sein oder als Oberflächenstrukturen in Form von lokalen Erhebungen und Vertiefungen an dessen Vorder- oder Rückseite. Vorzugsweise sind die Lichtumlenkstrukturen mittels eines Lasers hergestellt. Entsprechend komplementär ausgebildete Oberflächenstrukturen können am Lichtleiter 11 und/oder an der Reflektorfolie 12 vorgesehen sein. Durch das gegenseitige Ineinandergreifen der Oberflächenstrukturen kann zudem die Verbindung des Lichtleiters 10 zur Reflektorfolie 12 und/oder zum Lichtleiter 11 verbessert werden.

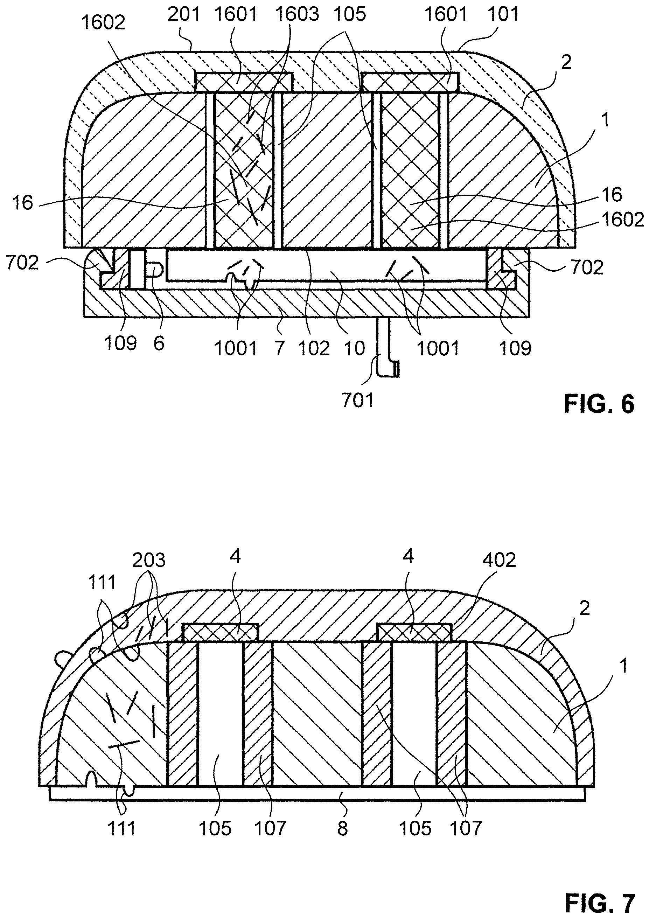

Bei der Ausführungsform der Figur 6 sind zwei Zusatzteile vorhanden, welche jeweils einen Durchbruch 105 des Basisteils 1 dichtend abdecken und selbst von der Deckschicht 2 aus Lack nach vorne und zu den Seiten hin abgedeckt sind. Diese beiden Zusatzteile sind jeweils als ein Einsatzteil 16 mit einer Auskragung 1601 und einem Fortsatz 1602 ausgebildet. Die Auskragung 1601 liegt jeweils auf der Vorderseite 101 des Basisteils 1 auf und dichtet den jeweiligen Durchbruch 105 ab. Der Fortsatz 1602 erstreckt sich von der Auskragung 1601 aus jeweils bis zur Rückseite 102 des Basisteils 1 in den jeweiligen Durchbruch 105 hinein.

Die Einsatzteile 16 bilden bevorzugt jeweils einen Lichtleiter, um Licht von einem rückseitig angeordneten Beleuchtungsmodul zu der aus einem transparenten oder transluzenten Lack hergestellten Deckschicht 2 hin zu leiten und diese zu hinterleuchten. Um eine möglichst gleichmässige Hinterleuchtung zu erreichen, können die Einsatzteile 16 und insbesondere deren Fortsätze 1602 Streuelemente 1603 aufweisen.

Das Beleuchtungsmodul ist ähnlich wie dasjenige der Figur 5 ausgebildet. Im Unterschied zu diesem weist dasjenige der Figur 6 jedoch am Gehäuse 7 ausgebildete Federhaken 702 auf, welche zum Einschnappen in Einschnappelemente 109 ausgebildet sind, welche sich von der Rückseite 102 des Basisteils 1 aus nach hinten erstrecken.

Bei dem in der Figur 7 gezeigten Bauteil ist an der Rückseite des Basisteils 1 eine Leuchtfolie 8 angebracht, welche die gesamte Rückseite des Bauteils bedeckt. Die Leuchtfolie 8 kann insbesondere eine Elektrolumineszenzfolie oder eine OLED-Folie sein.

Die im Basisteil 1 der Fig. 7 ausgebildeten Durchbrüche 105 weisen jeweils eine opak ausgebildete Auskleidung 107 auf. Die Folien 4, welche die Durchbrüche 105 abdecken, können ebenfalls opak ausgebildet sein, um einen Lichtdurchtritt durch die Durchbrüche 105 hindurch zu verhindern. Das von der Leuchtfolie 8 ausgestrahlte Licht gelangt hier somit durch das transparente oder transluzente Basisteil 1 hindurch zur Deckschicht 2. Um eine gezielte Lichtauskopplung zu erreichen und/oder um z.B. ein Symbol oder einen Schriftzug darzustellen können im oder am Basisteil 1 und/oder in oder an der Deckschicht 2 Lichtumlenkstrukturen 111 bzw. 203 vorgesehen sein.

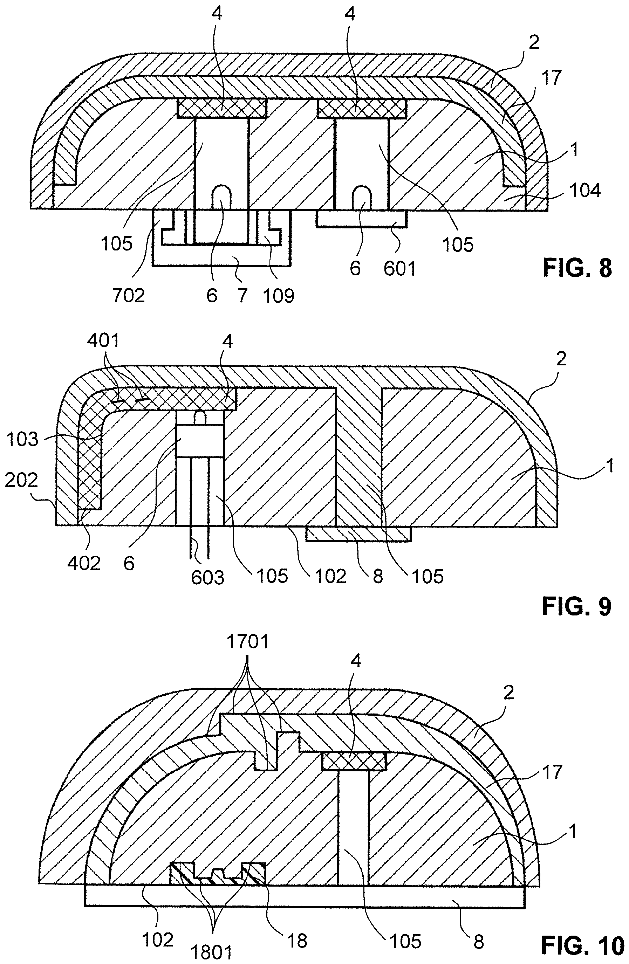

Bei der Ausführungsform der Figur 8 sind jeweils zwei transparent oder transluzent ausgebildete Deckschichten 2 und 17 aus Lack vorgesehen, wobei die zweite Deckschicht 2 die erste Deckschicht 17 vollständig zur Sichtseite hin bedeckt. Die beiden Deckschichten 2 und 17 bilden gemeinsam eine aus zwei Schichten bestehende Deckschicht aus Lack. Die Hinterleuchtung der beiden Deckschichten 2, 17 erfolgt mittels Leuchtelementen 6 durch jeweils einen Durchbruch 105 hindurch. Die Leuchtelemente 6 können jeweils in einem Gehäuse 7 gehalten sein, welches mit Federhaken 702 in Einschnappelemente 109 des Basisteils 1 eingeschnappt sein kann.

Die im Basisteil 1 ausgebildeten Durchbrüche 105 sind jeweils mittels einer transparenten oder transluzenten Folie 4 dichtend abgedeckt. Die Vorderseiten der Folien 4 sind mit dem Lack der Deckschicht 17 bedeckt und die seitlichen Stirnflächen der Folien 4 mit dem Material des Basisteils 1. Die Folie 4 sind dadurch optimal im Bauteil eingebettet und dichten die Durchbrüche 105 auf effektive Art und Weise zur Deckschicht 17 hin ab.

Bei der Ausführungsform der Figur 9 ist gezeigt, dass sich das mit der Deckschicht 2 in Kontakt stehende und von der Deckschicht 2 und/oder dem Basisteil 1 randseitig abgedeckte Zusatzteil auch von der Vorderseite bis zur seitlichen Randfläche 103 des Basisteils 1 erstrecken kann. Das Zusatzteil ist hier in Form einer transparenten oder transluzenten Folie 4 ausgebildet, welche in ihrem Inneren Lichtumlenkstrukturen 401 zur gezielten Lichtumlenkung aufweist. Die Folie 4 kann dadurch via einen Durchbruch 105 von einem darin eingesetzten Leuchtelement 6 beleuchtet werden, um Licht via den Rand 202 der Deckschicht 2 seitlich aus dem Bauteil auszukoppeln und das Bauteil somit zu umstrahlen. Die zur Stromversorgung des Leuchtelements 6 dienenden Kabel 603 erstrecken sich durch den Durchbruch 105 hindurch zur Rückseite des Bauteils.

Ein zweiter in der Figur 9 gezeigter Durchbruch 105 ist vollständig mit dem Lack der Deckschicht 2 ausgefüllt. Eine Leuchtfolie 8 ist an der Rückseite 102 des Basisteils 1 angebracht, um Licht in diesen Durchbruch 105 bzw. in das transparente oder transluzente Lackmaterial einzustrahlen und dadurch zur Sichtseite der Deckschicht 2 zu leiten.

Bei der Figur 10 sind in den Grenzbereichen zwischen dem Basisteil 1 und einer ersten aus Lack herstellten Deckschicht 17 sowie zwischen der ersten Deckschicht 17 und einer zweiten aus Lack hergestellten Deckschicht 2 jeweils Grenzflächenstrukturen 1701 vorgesehen. Die Grenzflächenstrukturen 1701 werden durch ineinandergreifende lokale Erhebungen und Vertiefungen der Oberflächen der Deckschichten 2 und 17 sowie des Basisteils 1 gebildet. Mittels der Grenzflächenstrukturen können diverse optische Effekte erzielt werden. Beispielsweise können die Grenzflächenstrukturen Symbole oder Schriftzüge bilden, welche für den Betrachter bei Hinterleuchtung des Bauteils erkennbar werden. Die Deckschichten 2, 17 bilden gemeinsam eine aus Lack hergestellte Deckschicht mit zwei Schichten.

Weitere Grenzflächenstrukturen können im Bereich der Rückseite 102 des Basisteils 1 vorgesehen sein. Beispielsweise kann ein Kunststoffeinsatz 18 in eine rückseitige Vertiefung des Basisteils eingesetzt sein und lokale Erhebungen und Vertiefungen 1801 aufweisen, welche in entsprechende lokale Erhebungen und Vertiefungen des Basisteils 1 eingreifen.

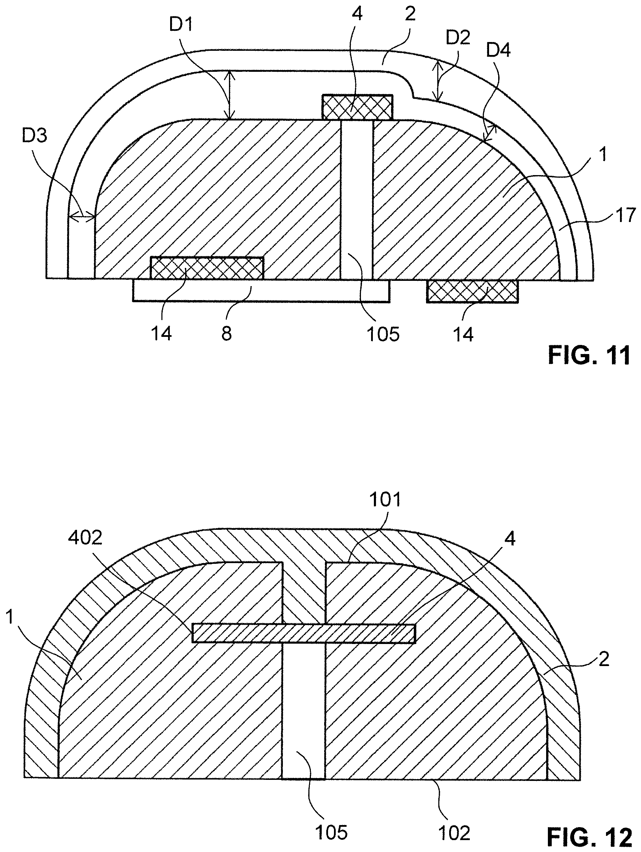

In der Figur 11 ist dargestellt, dass die beiden aufeinander laminierten und aus Lack hergestellten Deckschichten 2 und 17 an verschiedenen Stellen des Bauteils unterschiedliche Dicken D1, D2, D3 und D4 aufweisen können. Dies ist insbesondere mittels Herstellung der Deckschichten 2 und 17 im Spritzgussverfahren möglich. Mittels der unterschiedlichen Dicken können verschiedenste optische Effekte erzielt werden.

Ausserdem weist die Ausführungsform der Fig. 11 Folien 14 auf, welche an der Rückseite 102 des transparenten oder transluzenten Basisteils 1 angebracht sind. Die Folien dienen ebenfalls zur Erzielung von optischen Effekten. So kann eine Folie 14 beispielsweise einen Teil einer rückseitig am Bauteil angeordneten Leuchtfolie 8 abdecken. Dieselbe oder eine andere Folie 14 kann reflektierend und/oder farbig ausgebildet sein, um an der entsprechenden Stelle eine intensivere oder andersfarbige Lichtauskopplung zu generieren.

Bei der Ausführungsform der Figur 12 ist das Zusatzteil, welches hier wiederum als Folie 4 ausgebildet ist, innerhalb des Basisteils 1 angeordnet. Die Vorder- und die Rückseite der Folie 4, genauso wie deren äusserer Rand 402, werden vom Material des Basisteils 1 jeweils zumindest teilweise kontaktiert und insbesondere abgedeckt. Auf diese Weise wird der Durchbruch 105 optimal von der Folie 4 abgedichtet. Die Folie 4 erstreckt sich dabei durch den Durchbruch 105 hindurch. Da sich der Durchbruch 105 komplett innerhalb der von der Folie 4 überspannten Fläche befindet, überspannt die Folie 4 den Durchbruch 105 vollständig. Da sich der Lack der Deckschicht 2 von der Sichtseite her in den Durchbruch 105 hineinerstreckt, steht die Folie 4 dort mit ihrer Vorderseite in Kontakt mit der Deckschicht 2. Der Lack der Deckschicht 2 bildet ein Füllmaterial, welches den Durchbruch 105 zumindest teilweise ausfüllt.

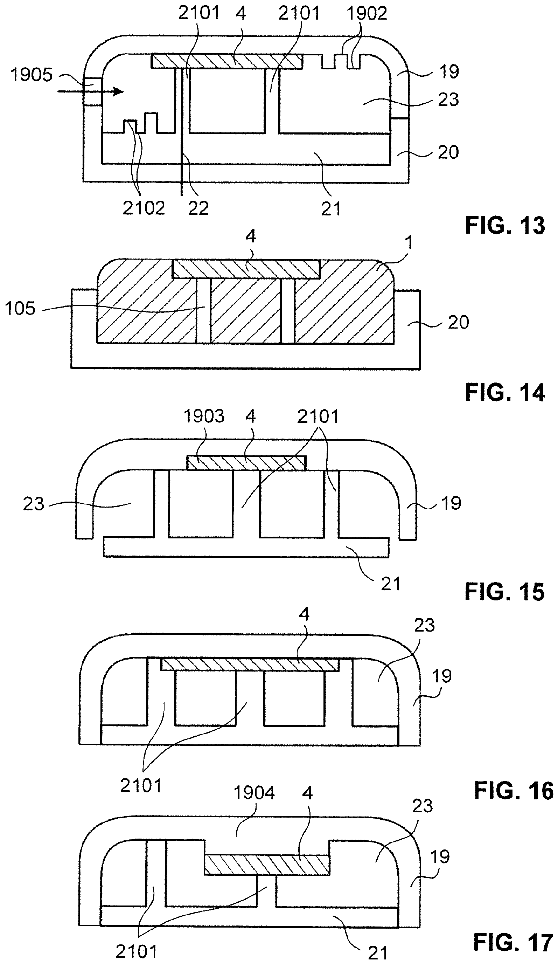

Die Figur 13 zeigt schematisch die Herstellung des Basisteils 1 eines erfindungsgemässen Bauteils. Es wird dazu ein Spritzgusswerkzeug verwendet mit einem ersten Formteil 19 und einem zweiten Formteil 20 sowie einem darin eingesetzten Formteileinsatz 21. Der Formteileinsatz 21 weist nach oben ragende Vorsprünge 2101 zur Ausbildung der Durchbrüche 105 auf und kann zudem lokale Erhebungen und Vertiefungen 2102 zum Ausbilden von Oberflächenstrukturen am Basisteil 1 aufweisen. Lokale Erhebungen und Vertiefungen 1902 zum Ausbilden von Oberflächenstrukturen am Basisteil 1 können auch am ersten Formteil 19 ausgebildet sein. Die Oberflächenstrukturen können beispielsweise Lichtumlenkstrukturen 111 bilden. Der Formteileinsatz 21 kann grundsätzlich auch entfallen, wenn die Strukturen 2101 und 2102 direkt am zweiten Formteil 20 ausgebildet sind.

Auf den endseitigen Stirnflächen der Vorsprünge 2101 wird vor dem Verschliessen des Spritzgusswerkzeugs ein Zusatzteil z.B. in Form einer Folie 4 angeordnet, welche später zum dichtenden Abdecken der Durchbrüche 105 dient. Um die Folie 4 sicher im Spritzgusswerkzeug zu positionieren, kann eine Vakuumleitung 22 durch einen oder mehrere der Vorsprünge 2101 führen. Die Folie 4 könnte beispielsweise auch mittels elektrostatischer Kräfte positioniert und lösbar gehalten werden. Zur Herstellung des Basisteils 1 wird das Spritzgusswerkzeug verschlossen, um eine innere Kavität 23 zu bilden. Via eine im ersten Formteil 19 ausgebildete Einspritzöffnung 1905 wird dann das Material des Basisteils 1 eingespritzt.

In der Figur 14 ist ein Basisteil 1 unmittelbar nach dessen Herstellung, das heisst nach Entfernung des ersten Formteils 19, gezeigt. Es ist gut ersichtlich, dass die Folie 4 einerseits alle Durchbrüche 105 dichtend abdeckt und andererseits randseitig vollständig umlaufend vom Material des Basisteils 1 abgedeckt ist.

In der Figur 15 ist eine Ausführungsform gezeigt, bei der das Bauteil derart hergestellt wird, dass die Folie 4 nur einen einzigen von mehreren Durchbrüchen 105 abdeckt. Dabei ist die Folie 4 in eine an der Innenseite des ersten Formteils 19 ausgebildeten Vertiefung 1903 eingelegt. Dies ermöglicht beispielsweise die Herstellung eines Bauteils, bei welchem die Folie 4, wie z.B. in der Fig. 1 gezeigt, einen Teil der Sichtseite des Bauteils bildet.

Bei der Ausführungsform der Figur 16 liegt die Folie 4 nur auf einem der Vorsprünge 2101 komplett auf. Somit dichtet die Folie 4 im fertig hergestellten Bauteil nur einen der Durchbrüche 105 ab. Die weiteren Durchbrüche 105 werden von der Folie 4 nicht vollständig überspannt. Um die Positionierung der Folie 4 im Spritzgusswerkzeug zu erleichtern und/oder eine bündige Anordnung der Folie 4 zur Vorderseite des Basisteils 1 zu bewirken, bilden die Vorsprünge 2101 gemeinsam eine Vertiefung mit seitlichen Begrenzungen.

Bei der in der Figur 17 gezeigten Ausführungsform erstreckt sich einer der Vorsprünge 2101 weniger weit zum ersten Formteil 19 hin als ein anderer. Die Folie 4 liegt auf dem kürzeren dieser Vorsprünge 2101 auf, und das erste Formteil 19 weist im Bereich der Folie 4 eine nach unten ragende Erhebung 1904 auf. Auf diese Weise kann ein Basisteil 1 hergestellt werden, bei dem die Folie 4 in einer im Bereich der Vorderseite 101 ausgebildeten Vertiefung angeordnet ist und dort einen Durchbruch 105 überspannt und dichtend abdeckt.

Wie bei allen dargestellten Ausführungsformen kann die Folie 4 zumindest bereichsweise oder als Ganzes transparent, transluzent oder opak ausgebildet sein oder auch durch ein anderes Zusatzteil, wie beispielsweise eine Leuchtfolie, ein Sensor oder ein anderes funktionales Element ersetzt werden. Anstelle einer Folie 4 könnte auch ein Zusatzteil in Form von zum Beispiel einer Dichtplatte verwendet werden. Das Zusatzteil kann beliebig eingefärbt sein.

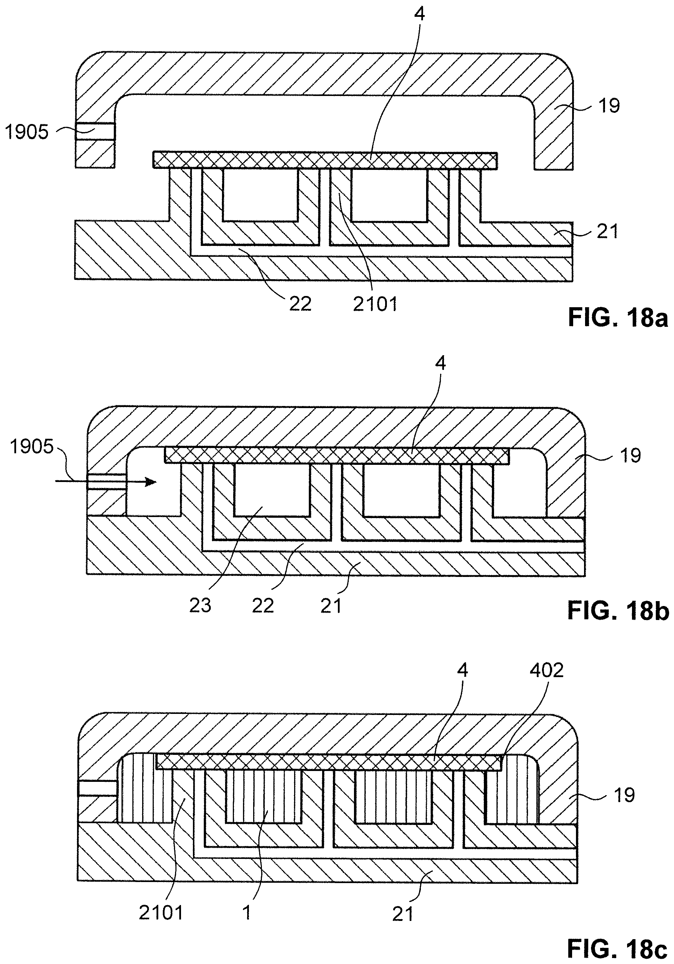

In den Figuren 18a bis 18g ist ein bevorzugtes Verfahren zur Herstellung eines Bauteils gemäss einer weiteren erfindungsgemässen Ausführungsform gezeigt.

Als erster Schritt wird, wie in der Fig. 18a gezeigt, ein Zusatzteil, wie z.B. eine Folie 4, auf Vorsprünge 2101 des Formteileinsatzes 21 aufgelegt. Die Vorsprünge 2101, welche zur Ausbildung von Durchbrüchen 105 im Basisteil 1 dienen, könnten grundsätzlich auch direkt an einem Formteil vorgesehen sein, d.h. der in der Fig. 18a gezeigte Formteileinsatz 21 könnte auch ein Formteil sein. Das Spritzgusswerkzeug wird dann mit einem ersten Formteil 19 verschlossen (Fig. 18b), und das Material des Basisteils 1 wird durch eine Einspritzöffnung 1905 in eine Kavität 23 eingespritzt, um das Basisteil 1 zu bilden (Fig. 18c). Die Folie 4 ist dabei bündig zur Vorderseite des Basisteils 1 angeordnet.

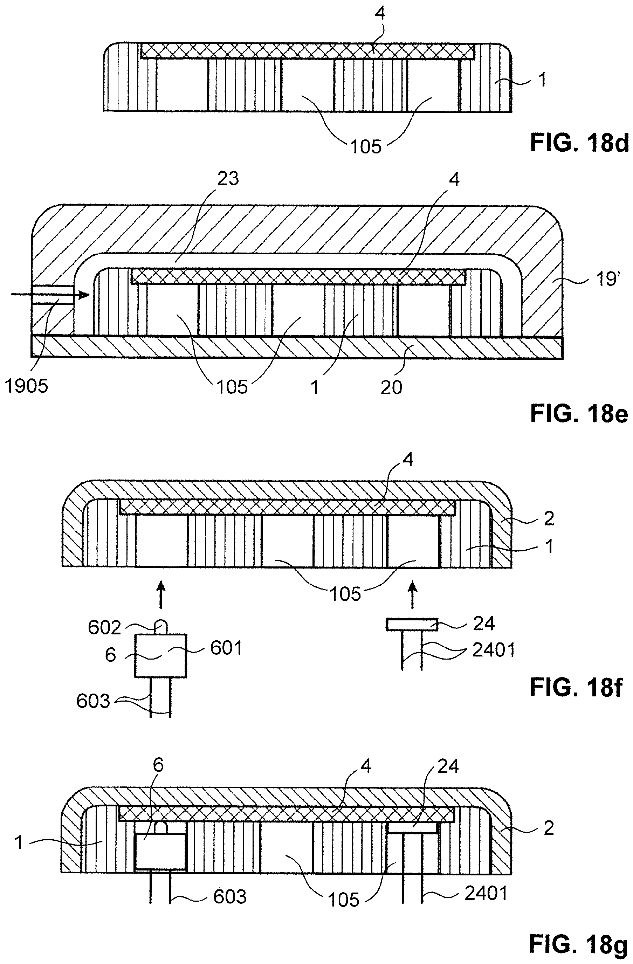

Das Basisteil 1 wird dann aus dem Spritzgusswerkzeug entnommen (Fig. 18d) und in ein weiteres Spritzgusswerkzeug mit einem ersten Formteil 19' und einem zweiten Formteil 20 eingesetzt. Nach dem Verschliessen (Fig. 18e) wird ein Lack durch eine am ersten Formteil 19' ausgebildete Einspritzöffnung in die Kavität 23 eingespritzt, um das Basisteil 1 und die Folie 4 mit dem Lack zu überfluten und eine Deckschicht 2 zu bilden.

Das Bauteil wird dann dem Spritzgusswerkzeug entnommen (Fig. 18f). Wie in der Figur 18g gezeigt ist, können in die Durchbrüche 105 Leuchtelemente 6 zur Hinterleuchtung der transparent oder transluzent ausgebildeten Deckschicht 2 durch die Folie 4 hindurch eingesetzt werden. Alternativ oder zusätzlich können in einen oder mehrere der Durchbrüche 105 Sensoren 24 eingesetzt werden. Steuer- und Versorgungsleitungen in Form von Kabeln 2401 können rückseitig durch den jeweiligen Durchbruch 105 hindurch nach aussen geführt werden.

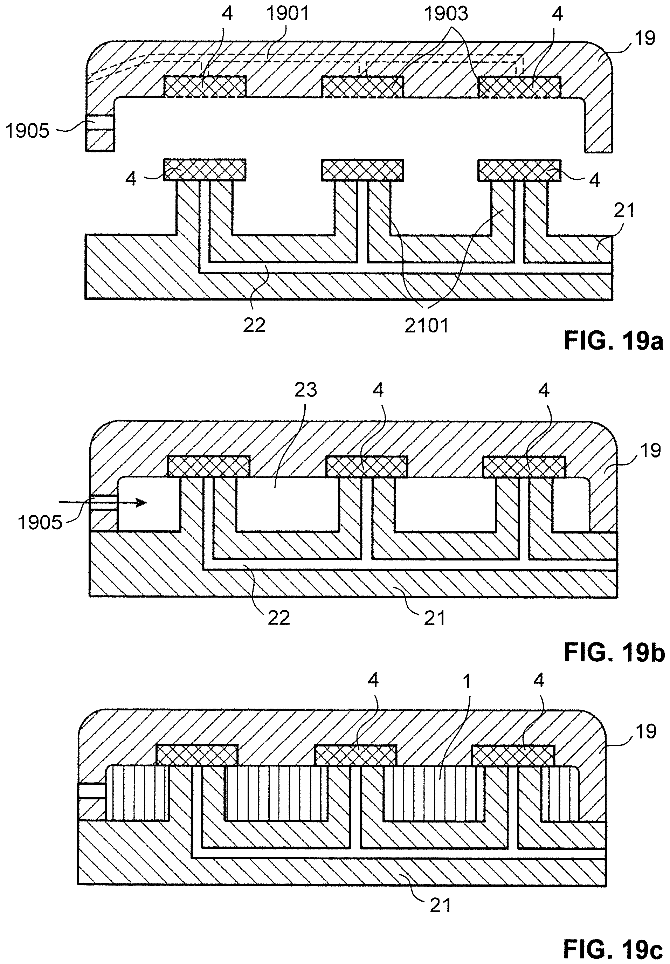

Ein weiteres bevorzugtes Verfahren zur Herstellung eines anderen erfindungsgemässen Bauteils ist in den Figuren 19a bis 19f gezeigt.

Gemäss Fig. 19a werden in einem ersten Schritt Zusatzteile, z.B. in Form von Folien 4, auf jeweils einen von mehreren Vorsprüngen 2101 eines Formteileinsatzes 21 aufgelegt. Alternativ, wie mit gestrichelten Linien in der Fig. 19a angedeutet, können im ersten Formteil 19 oberhalb der Vorsprünge 2101 auch Vertiefungen 1903 vorgesehen sein, in welche jeweils ein Zusatzteil bzw. eine Folie 4 eingesetzt wird. Die Folien 4 können z.B. mittels Anlegen eines Vakuums in den Vertiefungen 1903 gehalten werden. Hierzu kann das erste Formteil 19 eine entsprechende Vakuumleitung 1901 aufweisen.

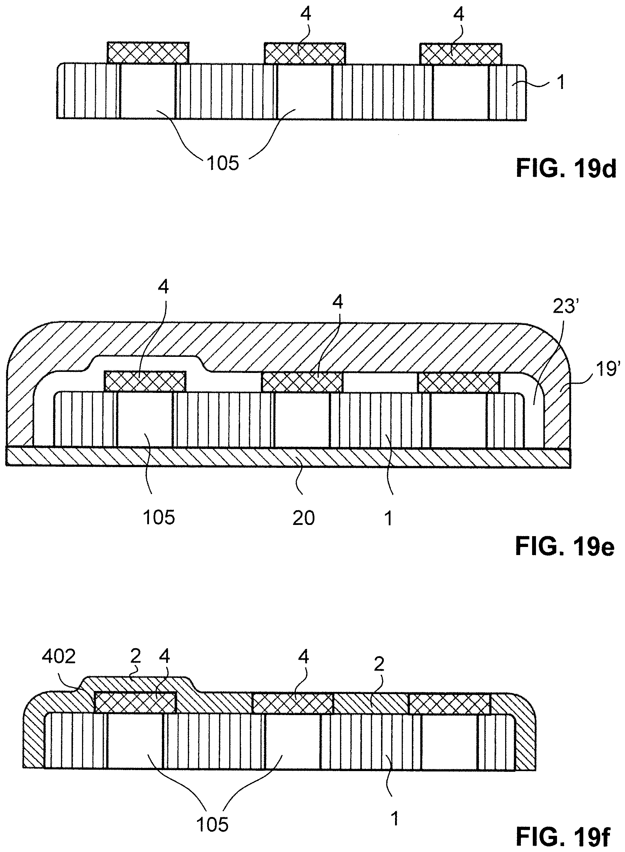

Das Spritzgusswerkzeug wird dann, wie in der Fig. 19b gezeigt, verschlossen und das Material des Basisteils 1 via eine Einspritzöffnung 1905 in die Kavität 23 eingespritzt. Die Kavität 23 wird dabei durch das erste Formteil 19 und den Formteileinsatz 21, welcher auch ein zweites Formteil sein könnte, gebildet. Dadurch wird das Basisteil 1 gebildet, welches nach dem Aushärten dem Spritzgusswerkzeug entnommen werden kann (Figuren 19c und 19d). Aufgrund der Vorsprünge 2101 haben sich unterhalb der Folien 4 jeweils Durchbrüche 105 im Basisteil 1 ausgebildet, welche durch die Folien 4 dichtend abgedeckt werden.

Das so hergestellte Basisteil 1 mit den daran angebrachten Folien 4 wird dann in ein weiteres Spritzgusswerkzeug mit einem ersten Formteil 19' und einem zweiten Formteil 20 eingesetzt. In die durch dieses Spritzgusswerkzeug gebildete Kavität 23' wird ein Lackmaterial eingespritzt, um die Vorderseite des Basisteils 1 damit zu überfluten und eine Deckschicht 2 zu bilden (Fig. 19e). Die Folien 4 können dabei mit ihren jeweiligen Vorderseiten an der Innenfläche des ersten Formteils 19' anliegen, um dann beim fertigen Bauteil gemeinsam mit der Deckschicht 2 einen Teil der Sichtseite 201 des Bauteils zu bilden. Alternativ kann zwischen den Folien 4 und der Innenfläche des ersten Formteils 19' ein Abstand verbleiben, wodurch das Lackmaterial die jeweilige Folie 4 überflutet und die Deckschicht 2 die Folie 4 somit überdeckt. In den Figuren 19e und 19f sind beide Varianten gezeigt. Nach dem Aushärten wird das Bauteil dem Spritzgusswerkzeug entnommen (Fig. 19f).

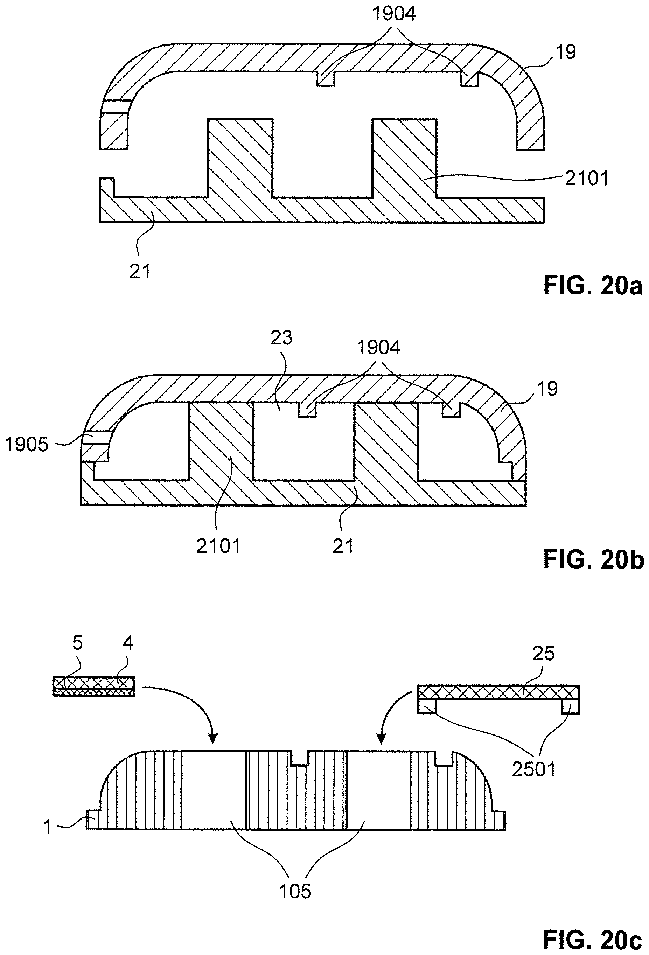

Ein weiteres bevorzugtes Verfahren zur Herstellung eines nochmals anderen erfindungsgemässen Bauteils ist in den Figuren 20a bis 20c gezeigt.

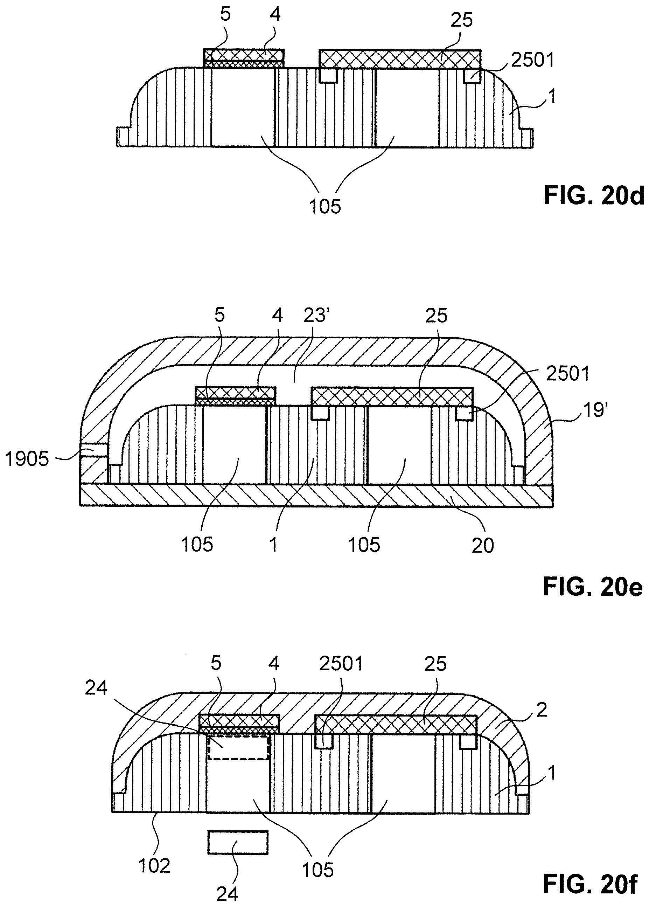

Im Gegensatz zu den in den Figuren 18a bis 19f gezeigten Verfahren, weist das erste Formteil 19 hier an seiner Innenfläche Erhebungen 1904 auf (Fig. 20a), welche in die Kavität 23 hineinragen (Fig. 20b) und zum Ausbilden von Vertiefungen an der Vorderseite des Basisteils 1 dienen. Diese Vertiefungen dienen zur sicheren Positionierung eines mit entsprechenden Positionierelementen 2501 versehenen Zusatzteils in Form eines Sensors 25 (Figuren 20c und 20d). Der Sensor 25 wird dabei derart positioniert, dass er einen der Durchbrüche 105 vollständig überspannt und diesen im fertigen Bauteil dichtend abdeckt. Oberhalb eines zweiten Durchbruchs 105 wird ein zweites Zusatzteil in Form einer Folie 4 am Basisteil 1 angebracht. Hierzu wird die Folie 4 mit Hilfe eines Klebstoffs und/oder eines Haftvermittlers 5 an der Vorderseite des Basisteils 1 angeklebt. Die Folie 4 überspannt zusammen mit dem Klebstoff und/oder mit dem Haftvermittler 5 den Durchbruch 105, was nach dem Anspritzen der Deckschicht 2 (Figuren 20e und 20f) eine sehr einfache Befestigung eines Zusatzteils, z.B. in Form eines Sensors 24, im entsprechenden Durchbruch 105 ermöglicht. Der Sensor 24 kann hierzu einfach von der Rückseite her derart in den Durchbruch 105 eingesetzt werden, dass er am Klebstoff und/oder am Haftvermittler 5 anliegt (siehe Fig. 20f). Die Deckschicht 2 bildet hier die gesamte Sichtseite des Bauteils und deckt sowohl die Folie 4 wie auch den Sensor 25 nach vorne hin und seitlich umlaufend vollständig ab.

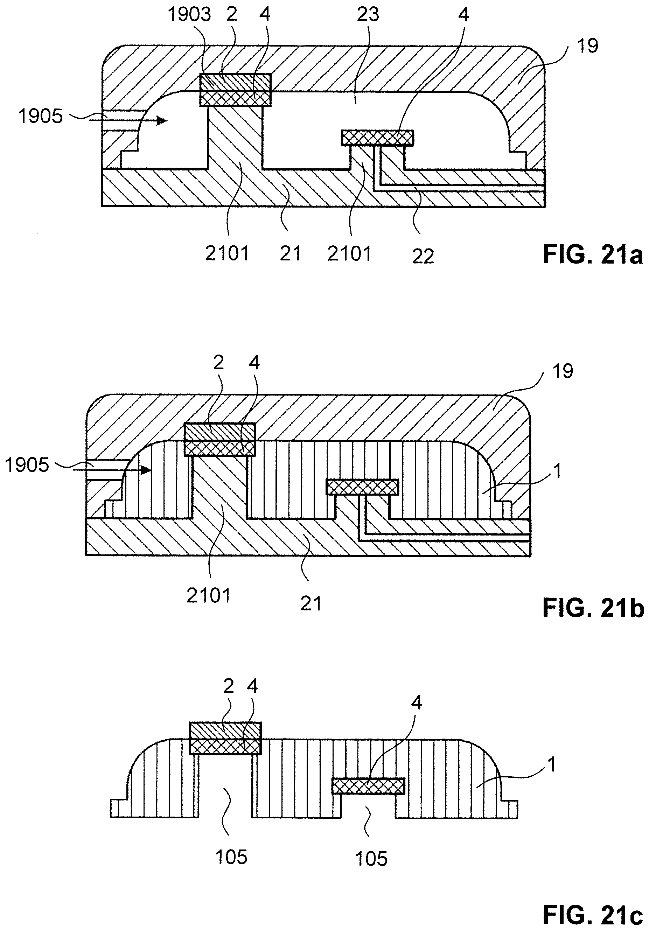

Ein weiteres bevorzugtes Verfahren zur Herstellung eines erfindungsgemässen Bauteils gemäss einer weiteren Ausführungsform ist in den Figuren 21a bis 21e gezeigt.

Im Gegensatz zu den in den Figuren 18a bis 20f gezeigten Verfahren wird hier ein Formteileinsatz 21 mit Vorsprüngen 2101 verwendet, welche sich unterschiedlich weit in die Kavität 23 hinein erstrecken (Fig. 21a). Ein erstes Zusatzteil in Form einer Folie 4, die via eine Vakuumleitung 22 am entsprechenden Vorsprung 2101 gehalten wird, wird dadurch zur Sichtseite hin mit dem Material des Basisteils 1 überflutet (Figuren 21b und 21c). Der darunter von dieser Folie 4 überspannte Durchbruch 105 erstreckt sich somit nicht ganz durch das Basisteil 1 hindurch.

Ein zweites Zusatzteil in Form einer Folie 4 wird auf einem anderen Vorsprung 2101 positioniert. Diese Folie 4 weist bereits beim Einsetzen in das Spritzgusswerkzeug eine aus einem Lack hergestellte Deckschicht 2 auf. Diese Deckschicht 2 wird dabei vollständig von einer im ersten Formteil 19 ausgebildeten Vertiefung 1903 aufgenommen. Die Deckschicht 2 bildet dadurch beim fertig hergestellten Bauteil einen Teil der Sichtseite 201.

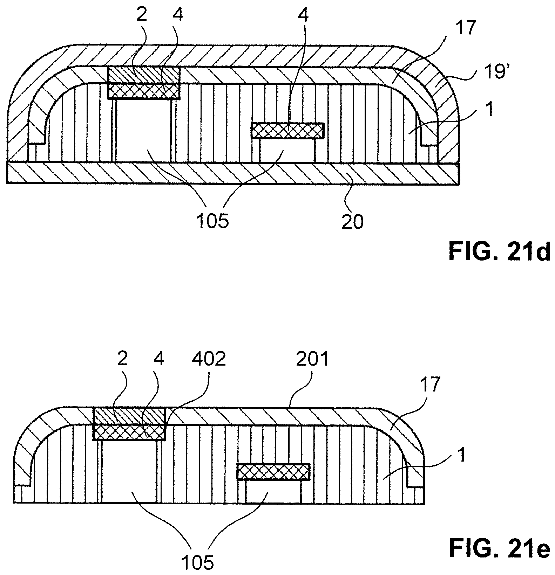

Nach dem Einsetzen des Basisteils 1 mit daran angebrachten Zusatzteilen und Deckschicht 2 in ein weiteres Spritzgusswerkzeug, wird das Basisteil 1 mit einem Lack überflutet (Fig. 21d). Der Lack bildet eine weitere Deckschicht 17, deren Vorderseite bündig zur Vorderseite der ersten Deckschicht 2 zu liegen kommt. Die beiden Deckschichten 2 und 17 bilden somit gemeinsam die Sichtseite 201 des Bauteils (Fig. 21e). Der äussere Rand 402 der von der Deckschicht 2 bedeckten Folie 4 wird dabei umlaufend vollständig vom Material des Basisteils 1 abgedeckt. Der darunter liegende Durchbruch 105 ist dadurch optimal zu den Deckschichten 2 und 17 hin abgedichtet.

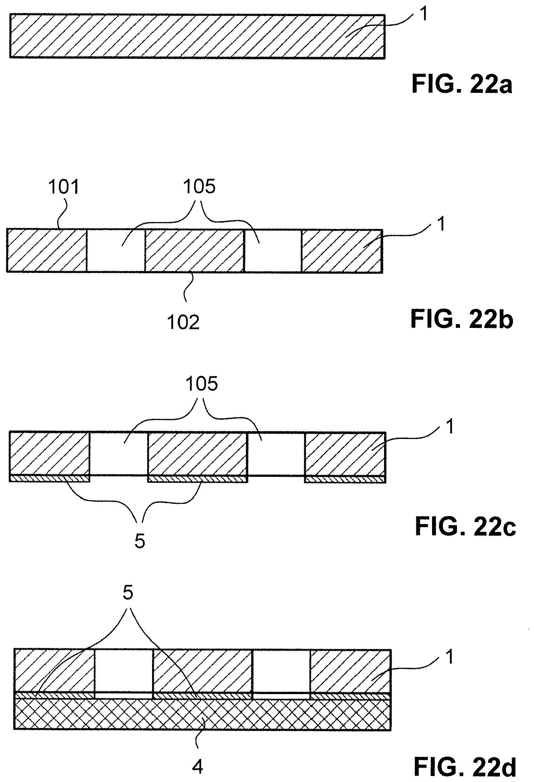

Die Figuren 22a bis 22h illustrieren ein weiteres Ausführungsbeispiel zur Herstellung eines erfindungsgemässen Bauteils.

Als erstes wird hier ein Basisteil 1 hergestellt, indem darin mehrere durchgehende Durchbrüche 105 ausgebildet, z.B. ausgestanzt, werden (Figuren 22a und 22b). Auf die Rückseite 102 des Basisteils 1 wird dann ein Klebstoff und/oder ein Haftvermittler 5 aufgebracht (Fig. 22c) und anschliessend ein Zusatzteil in Form einer Folie 4 derart daran befestigt, dass es sämtliche Durchbrüche 105 vollständig überspannt (Fig. 22d).

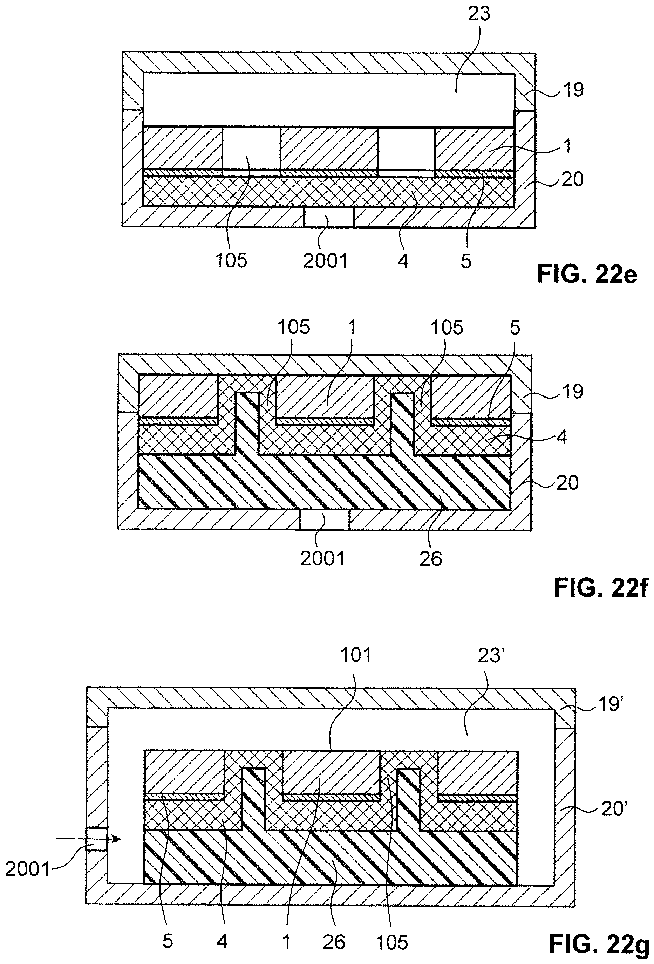

Das Basisteil 1 mit der daran angebrachten Folie 4 wird dann in eine von zwei Formteilen 19 und 20 gebildete Kavität 23 eingelegt (Fig. 22e) und durch eine im zweiten Formteil 20 vorgesehene Einspritzöffnung 2001 hindurch mit einem Kunststoff hinterspritzt. Durch den Einspritzdruck wird die flexible Folie 4 in die Durchbrüche 105 hineingedrückt (Fig. 22f). Basisteil 1 und Folie 4 werden dabei gegen das erste Formteil 19 gepresst, wodurch sich bündige Übergänge der Oberfläche der Folie 4 zur Oberfläche des Basisteils 1 ergeben. Der eingespritzte Kunststoff bildet eine rückseitig am Basisteil 1 und an der Folie 4 angeordnete Kunststoffschicht 26, welche insbesondere eine Tragschicht bilden kann. Wie aus der Fig. 22f ersichtlich ist, greift dabei nicht nur die Folie 4, sondern auch die Kunststoffschicht 26 in die Durchbrüche 105 ein.

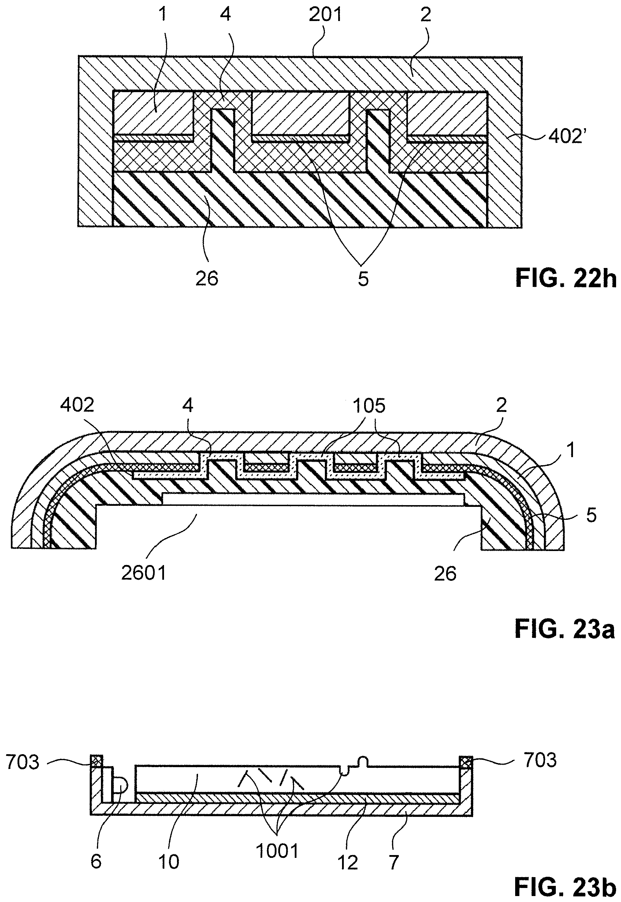

Das so hergestellte noch unfertige Bauteil wird in eine Kavität 23' eines weiteren Spritzgusswerkzeugs mit grösser dimensioniertem ersten Formteil 19' und grösser dimensioniertem zweiten Formteil 20' eingesetzt und mit einem Lack überflutet (Fig. 22g). Der Lack überflutet dabei nicht nur die Vorderseite 101 des Basisteils 1 sowie die Folie 4 in den Bereichen innerhalb der Durchbrüche 105, sondern auch deren seitliche Stirnflächen sowie den seitlichen äusseren Rand der Kunststoffschicht 26. Die dadurch entstehende Deckschicht 2 bildet somit die gesamte Sichtfläche 201 des fertigen Bauteils sowohl an der Vorderseite als auch zu den Seiten hin (Fig. 22h).

Ein weiteres erfindungsgemässes Bauteil, das ähnlich hergestellt wurde wie in den Figuren 22a bis 22h dargestellt, ist in den Figuren 23a und 23b gezeigt.

Bei der Ausführungsform der Fig. 23a wird die Folie 4 seitlich nicht von der Deckschicht 2, sondern der äussere Rand 402 wird von der Kunststoffschicht 26 abgedeckt. Die Kunststoffschicht 26 bildet zudem eine rückseitige Aufnahmevertiefung 2601, in welche das in der Fig. 23b gezeigte Beleuchtungsmodul einsetzbar ist. In der vorliegenden Ausführungsform ist das Basisteil 1 opak ausgebildet und das Beleuchtungsmodul dient dazu, die aus Lack hergestellte transparente oder transluzente Deckschicht 2 durch die Durchbrüche 105 hindurch zu hinterleuchten. Die Durchbrüche 105 können z.B. Symbole, Buchstaben oder Schriftzüge bilden. Zur Verteilung des Lichts zu den Durchbrüchen 105 dient ein Lichtleiter 10 des Beleuchtungsmoduls, in welchen das Licht seitlich von einem Leuchtelement 6 eingestrahlt wird. Um eine intensive Lichtauskopplung aus dem Lichtleiter 10 zu den Durchbrüchen 105 hin zu erreichen, können dort jeweils Lichtumlenkstrukturen 1001 im oder am Lichtleiter 10 vorgesehen sein. An der Rückseite des Lichtleiters 10 ist eine Reflektorfolie 12 angebracht. Das Beleuchtungsmodul weist ein vorzugsweise opak ausgebildetes Gehäuse 7 auf, welches mittels Klebstoff und/oder mittels Haftvermittler 703 an der Rückseite der Kunststoffschicht 26 befestigbar ist.

**BEZUGSZEICHENLISTE**

| | | | |
|---|---|---|---|
| 1 | Basisteil | 603 | Kabel |
| 101 | Vorderseite | | |
| 102 | Rückseite | 7 | Gehäuse |
| 103 | Seitliche Stirnfläche | 701 | Befestigungselement |
| 104 | Randseitiger Vorsprung | 702 | Federhaken |
| 105 | Durchbruch | 703 | Klebstoff / Haftvermittler |
| 106 | Konus | | |
| 107 | Auskleidung | 8 | Leuchtfolie |
| 108 | Befestigungselement | 9 | Füllmaterial |
| 109 | Einschnappelement | | |
| 110 | Vertiefung | 10 | Lichtleiter |
| 111 | Lichtumlenkstruktur | 1001 | Lichtumlenkstruktur |
| | | | |
| 2 | Deckschicht | 11 | Lichtleiter |
| 201 | Sichtseite | 12 | Reflektorfolie |
| 202 | Rand | 13 | Dichtschaum |
| 203 | Lichtumlenkstruktur | 14 | Folie |
| | | 15 | Transluzente/transparente |
| 3 | Leuchtfolie | | Deckschicht |
| 301 | Kabel | | |
| | | 16 | Einsatzteil |
| 4 | Folie | 1601 | Auskragung |
| 401 | Lichtumlenkstruktur | 1602 | Fortsatz |
| 402 | Äusserer Rand | 1603 | Streuelement |
| | | | |
| 5 | Klebstoff / Haftvermittler | 17 | Deckschicht |
| | | 1701 | Erhebung/Vertiefung |
| 6 | Leuchtelement | | |
| 601 | Platine | 18 | Kunststoffeinsatz |
| 602 | LED | 1801 | Erhebung/Vertiefung |
| | | 22 | Vakuumleitung |
| 19, 19' | Erstes Formteil | | |
| 1901 | Vakuumleitung | 23, 23' | Kavität |
| 1902 | Erhebung/Vertiefung | | |
| 1903 | Vertiefung | 24 | Sensor |
| 1904 | Erhebung | 2401 | Kabel |
| 1905 | Einspritzöffnung | | |
| | | 25 | Sensor |
| 20, 20' | Zweites Formteil | 2501 | Positionierelement |
| 2001 | Einspritzöffnung | | |
| | | 26 | Kunststoffschicht |
| 21 | Formteileinsatz | 2601 | Aufnahmevertiefung |
| 2101 | Vorsprung | | |
| 2102 | Erhebung/Vertiefung | D1, D2, D3, D4 | Dicke |

## Patentansprüche

1. Bauteil insbesondere für ein Fahrzeug, aufweisend
ein Basisteil (1) mit einer Vorderseite (101) und einer Rückseite (102);
eine aus einem Lack hergestellte Deckschicht (2, 17), welche auf der Vorderseite (101) des Basisteils (1) angebracht ist und zumindest einen Teil einer Sichtseite (201) des Bauteils bildet; sowie
ein mit der Deckschicht (2, 17) in Kontakt stehendes Zusatzteil (3, 4, 25), welches randseitig umlaufend vollständig abgedeckt ist,
wobei das Basisteil (1) einen oder mehrere Durchbrüche (105) aufweist, welche sich von der Rückseite (102) bis zur Vorderseite (101) des Basisteils (1) erstrecken,
und wobei das Zusatzteil (3, 4, 25) ein Abdeckelement zur dichtenden Abdeckung von sämtlichen der einen oder mehreren Durchbrüche (105) bildet, die vom Zusatzteil (3, 4, 25) vollständig überspannt werden.

2. Bauteil nach Anspruch 1, wobei das Zusatzteil (3, 4, 25) zwischen der Deckschicht (2, 17) und dem Basisteil (1) angeordnet ist.

3. Bauteil nach Anspruch 1 oder 2, wobei das Zusatzteil eine Folie (3, 4) ist.

4. Bauteil nach einem der vorhergehenden Ansprüche, wobei es sich beim Zusatzteil um ein elektrisches funktionales Element, wie eine Leuchtfolie (3) oder einen Sensor (25), handelt.

5. Bauteil nach einem der vorhergehenden Ansprüche, wobei das Basisteil (1) und/oder die Deckschicht (2, 17) im Spritzgussverfahren hergestellt ist.

6. Bauteil nach einem der vorhergehenden Ansprüche, wobei das Zusatzteil (4) transparent oder transluzent ausgebildet ist, um von einem Leuchtelement (6, 8) hinterleuchtet zu werden.

7. Bauteil nach einem der vorhergehenden Ansprüche, wobei sich das Zusatzteil (3, 4, 25) über mindestens 50%, bevorzugt über mindestens 70%, noch bevorzugter über mindestens 90% der Vorderseite (101) des Basisteils (1) erstreckt.

8. Bauteil nach einem der vorhergehenden Ansprüche, wobei das Zusatzteil (3, 4, 25) eine seitliche Stirnfläche (103) des Basisteils (1) zumindest teilweise überdeckt.

9. Bauteil nach einem der vorhergehenden Ansprüche, wobei in zumindest einem der vom Zusatzteil (3, 4, 25) dichtend abgedeckten Durchbrüche (105) zumindest teilweise ein Leuchtelement (6) und/oder ein Sensor (24) eingesetzt ist.

10. Bauteil nach einem der vorhergehenden Ansprüche, wobei das Zusatzteil (3, 4, 25) mittels eines Klebstoffs und/oder mittels eines Haftvermittlers (5) am Basisteil (1) angebracht ist, und wobei bevorzugt in zumindest einem der vom Zusatzteil (3, 4, 25) dichtend abgedeckten Durchbrüche (105) ein funktionales Element, wie insbesondere ein Sensor (24), am Klebstoff und/oder am Haftvermittler (5) angebracht ist.

11. Bauteil nach einem der vorhergehenden Ansprüche, wobei das Basisteil (1) zwischen der Deckschicht (2, 17) und dem Zusatzteil (3, 4, 25) angeordnet ist, und wobei das Zusatzteil (3, 4, 25) bevorzugt zwischen dem Basisteil (1) und einer rückseitig zum Zusatzteil (3, 4, 25) angebrachten Schicht (26) angeordnet ist.

12. Bauteil nach einem der vorhergehenden Ansprüche, wobei sich das Zusatzteil (3, 4, 25) zumindest teilweise in zumindest einen der vom Zusatzteil (3, 4, 25) dichtend abgedeckten Durchbrüche (105) hinein erstreckt.

13. Bauteil nach einem der vorhergehenden Ansprüche, aufweisend eines oder mehrere derartiger Zusatzteile (3, 4, 25), wobei sämtliche der einen oder mehreren Durchbrüche (105) des Basisteils (1) von dem einen oder den mehreren der Zusatzteile (3, 4, 25) dichtend abgedeckt sind.

14. Bauteil nach einem der vorhergehenden Ansprüche, wobei zumindest ein Teil, bevorzugt alle, der vom Zusatzteil (3, 4, 25) dichtend abgedeckten Durchbrüche (105) des Basisteils (1) jeweils einen Hohlraum bilden.

15. Bauteil nach einem der vorhergehenden Ansprüche, wobei zumindest ein Teil, bevorzugt alle, der vom Zusatzteil (3, 4, 25) dichtend abgedeckten Durchbrüche (105) des Basisteils (1) jeweils zumindest teilweise, bevorzugt vollständig, mit einem Füllmaterial (2, 9) ausgefüllt sind, welches ein anderes Material darstellt als dasjenige des Basisteils (1).

16. Verfahren zur Herstellung eines Bauteils, insbesondere eines Bauteils gemäss einem der vorhergehenden Ansprüche, welches ein Basisteil (1) mit einer Vorderseite (101) und einer Rückseite (102) sowie mit einem oder mehreren Durchbrüchen (105) aufweist, welche sich von der Rückseite (102) bis zur Vorderseite (101) des Basisteils (1) erstrecken, das Verfahren aufweisend die Schritte:
- Anbringen eines als Abdeckelement ausgebildeten Zusatzteils (3, 4, 25) am Basisteil (1) derart, dass das Zusatzteil (3, 4, 25) sämtliche der einen oder mehreren Durchbrüche (105) des Basisteils (1), die vom Zusatzteil (3, 4, 25) vollständig überspannt werden, dichtend abdeckt; sowie
- Anbringen einer aus einem Lack hergestellten Deckschicht (2, 17) auf der Vorderseite (101) des Basisteils (1) derart, dass die Deckschicht (2, 17) zumindest einen Teil einer Sichtseite (201) des Bauteils (1) bildet und zudem das Zusatzteil (3, 4, 25) kontaktiert;
wobei das Zusatzteil (3, 4, 25) derart am Basisteil (1) angebracht wird, dass es im fertig hergestellten Bauteil randseitig umlaufend vollständig abgedeckt ist.
